# FASCICULE DE BREVET EUROPEEN

(11) **EP 4 363 207 B1**
(45) Date de publication et mention de la délivrance du brevet: **06.08.2025**
(21) Numéro de dépôt: 22744799.2
(22) Date de dépôt: 22.06.2022
(51) Int. Cl.: B29D 30/32

(54) **INSTALLATION A GALETS BASCULANTS POUR LE RABATTAGE D'UNE NAPPE CARCASSE DE BANDAGE PNEUMATIQUE AUTOUR D'UNE TRINGLE ET PROCÉDÉ DE RETROUSSAGE**
KIPPROLLENSYSTEM ZUM FALTEN EINES LUFTREIFENKARKASSENEINSATZES UM EINEN WULSTKERN UND UMFALTVERFAHREN
TILTING ROLLER SYSTEM FOR FOLDING A PNEUMATIC TYRE CARCASS INSERT AROUND A BEAD CORE AND FOLDING-UP METHOD

(30) Priorité: 30.06.2021 FR 2107014
(43) Date de publication de la demande: 08.05.2024
(73) Titulaire: COMPAGNIE GENERALE DES ETABLISSEMENTS MICHELIN, 63000 Clermont-Ferrand (FR)
(72) Inventeur: MASSOPTIER-DAVID, Michaël, 63040 Clermont-Ferrand Cedex 9 (FR); GUERY, Bertrand, 63040 Clermont-Ferrand Cedex 9 (FR)
(74) Mandataire: M.F.P. Michelin
(86) Numéro de dépôt international: PCT/FR2022/051219
(87) Numéro de publication internationale: WO 2023/275457

(56) Documents cités:
- FR-A1- 2 352 662
- FR-A1- 2 354 875
- JP-A- 2008 074 058
- US-A- 2 373 354
- US-A- 4 614 562

## Description

La présente invention concerne le domaine général de la fabrication des bandages, plus particulièrement la fabrication des bandages pneumatiques, et notamment la fabrication des bandages pneumatiques destinés aux avions, ou des bandages pneumatiques destinés aux engins de génie civil.

La présente invention concerne plus particulièrement la fabrication de blocs carcasse destinés à former l'armature de tels bandages, et porte plus spécifiquement sur l'opération de retroussage, au cours de laquelle, après avoir formé un sous-ensemble qui comprend au moins d'une part une première tringle de renfort annulaire et une seconde tringle de renfort annulaire, destinées à renforcer les talons du bandage qui assureront l'ancrage dudit bandage sur une jante, et d'autre part une nappe carcasse contenant des fils de renfort qui relient lesdites première et seconde tringles de renfort l'une à l'autre, on rabat chacune des extrémités axiales libres de la nappe carcasse sur l'intérieur de ladite nappe carcasse, autour de la tringle de renfort qui lui est la plus proche, de sorte à emprisonner ladite tringle de renfort dans le pli de nappe carcasse ainsi formé.

Pour réaliser cette opération de retroussage, il a notamment été proposé de venir presser l'extrémité de la nappe carcasse contre la tringle de renfort au moyen d'un rouleau concave ayant la forme d'un diabolo, c'est-à-dire une forme de sablier obtenu par la réunion de deux tronc de cône opposés par leurs sommets, dont le creux épouse sensiblement la forme de la section de la tringle et dont l'axe de rotation est transverse à la direction circonférentielle de la tringle, de mettre en rotation solidairement la nappe carcasse et la tringle de sorte que le rouleau roule sur la face externe de la nappe carcasse, selon une trajectoire circonférentielle qui suit le tracé annulaire de la tringle de renfort, et de faire pénétrer progressivement le rouleau vers l'intérieur de la nappe carcasse, en faisant basculer l'axe central dudit rouleau vers l'intérieur de la nappe carcasse, tandis que ledit rouleau roule en continu le long de la tringle de renfort, si bien que, au fur et mesure des rotations accomplies par la nappe carcasse sur elle-même, de ledit rouleau presse et rabat progressivement l'extrémité libre de la nappe carcasse autour de la tringle de renfort, vers et contre la face interne de la nappe carcasse. Une telle installation de retroussage destinée à rabattre un tronçon d'extrémité d'une paroi cylindrique d'un bloc carcasse de bandage autour d'une tringle de renfort dudit bloc carcasse est décrite dans le brevet US 4,614,562.

Toutefois, du fait que le rouleau se déplace en roulant sur la nappe carcasse selon un mouvement porté par une direction circonférentielle, c'est-à-dire une direction qui est tangente à la tringle de renfort et sensiblement normale au plan radial qui contient l'axe central de la nappe carcasse et qui passe par le point de contact entre le rouleau et la nappe carcasse, alors ledit rouleau exerce sur l'extrémité libre de la nappe, lors de l'action de retroussage, une composante de poussée qui est orientée selon ladite direction circonférentielle, et qui tend à chasser l'extrémité libre de la nappe carcasse dans ladite direction circonférentielle, et donc à provoquer une déviation correspondante des fils de renforts voire à froisser ladite extrémité libre de la nappe carcasse tandis que l'on rabat celle-ci sur la face intérieure de la nappe carcasse.

Par ailleurs, il est envisagé de développer des bandages pneumatiques qui présentent des extrémités libres de nappe carcasse possédant une grande longueur axiale en saillie des tringles de renfort, de sorte que lesdites extrémités libres sont encore plus sensibles au froissement, et ne peuvent de surcroît pas être totalement rabattues par un rouleau connu exerçant une action de rouletage circonférentielle, puisqu'un tel rouleau n'a pas une portée axiale suffisante pour atteindre la lisière de l'extrémité libre de la nappe carcasse et plaquer ladite lisière contre la face interne de la nappe carcasse, à relativement grande distance axialement de la tringle de renfort.

Les objets assignés à l'invention visent par conséquent à remédier aux inconvénients susmentionnés et proposer une nouvelle installation, ainsi qu'un nouveau procédé de retroussage, qui permette de réaliser de manière fiable, rapide et reproductible une opération de retroussage, en particulier sur des bandages qui possèdent une nappe carcasse présentant des extrémités libres de grande longueur.

Les objets assignés à l'invention sont atteints au moyen d'une installation de retroussage destinée à rabattre un tronçon d'extrémité d'une paroi cylindrique d'un bloc carcasse de bandage autour d'une tringle de renfort dudit bloc carcasse, ladite paroi cylindrique s'étendant le long et autour d'un axe central dit « axe de roulis » et ladite tringle de renfort s'étendant selon une ligne génératrice qui forme un anneau autour dudit axe de roulis, ladite installation comprenant:
- un dispositif de rabattage qui comporte au moins un organe presseur, tel qu'un galet presseur, et qui est agencé pour venir appliquer ledit organe presseur contre la face radialement externe du tronçon d'extrémité, dans un secteur angulaire de la paroi cylindrique dit « secteur angulaire de travail » qui correspond à une fraction de la circonférence du tronçon d'extrémité autour de l'axe de roulis, et pour faire exécuter audit organe presseur un mouvement basculant en tangage autour de la ligne génératrice de la tringle de renfort, de sorte que l'organe presseur rabatte vers la face radialement interne de la paroi cylindrique du bloc carcasse, autour de la tringle de renfort, la portion du tronçon d'extrémité qui est située dans le secteur angulaire de travail concerné,
- un dispositif d'entraînement conçu pour modifier, par incréments angulaires successifs, la position relative de l'organe presseur par rapport au bloc carcasse autour de l'axe de roulis, de manière à ce que l'organe presseur puisse exécuter son mouvement basculant en tangage successivement dans différents secteurs angulaires de travail pour rabattre les unes après les autres les portions correspondantes du tronçon d'extrémité,
- un sélecteur conçu pour placer alternativement l'organe presseur dans une configuration de travail, qui permet audit organe presseur de venir en prise contre la face externe du tronçon d'extrémité dans le secteur angulaire de travail considéré et de forcer le pliage de la portion correspondante du tronçon d'extrémité lorsque le dispositif de rabattage exécute le mouvement basculant en tangage dans ledit secteur angulaire de travail considéré, puis dans une configuration de retrait, qui empêche ledit organe presseur d'interférer avec le tronçon d'extrémité lorsque le dispositif d'entraînement modifie la position relative dudit organe presseur par rapport à la paroi cylindrique du bloc carcasse, autour de l'axe de roulis, pour changer de secteur angulaire de travail.

Avantageusement, l'invention permet de mettre en œuvre un processus de rabattage pas à pas, par incréments angulaires successifs autour de l'axe de roulis, et selon lequel, à chaque nouveau pas, c'est-à-dire à chaque fois que l'on place l'organe presseur dans un nouveau secteur angulaire de travail, on exécute un nouveau mouvement basculant en tangage dudit organe presseur, qui permet de plier et presser le tronçon d'extrémité contre la face radialement interne de la paroi du bloc carcasse.

Avantageusement, le mouvement basculant en tangage qui opère le rabattage du tronçon d'extrémité d'une part est local, en ceci que le mouvement basculant en tangage se limite au secteur angulaire de travail considéré, c'est-à-dire au secteur angulaire qu'occupe l'organe presseur autour de l'axe de roulis et qui représente donc une simple fraction de la circonférence de la tringle de renfort, et d'autre part est exécuté autour d'un axe de basculement qui se confond en pratique sensiblement avec la direction circonférentielle définie par la ligne génératrice et que matérialise ladite tringle de renfort dans ledit secteur angulaire considéré, de sorte que le mouvement basculant en tangage n'induit pas de poussée circonférentielle sur la portion du tronçon d'extrémité soumise à l'opération de rabattage.

En outre, la mise en retrait de l'organe presseur pendant le déplacement relatif en roulis dudit organe presseur par rapport à la paroi du bloc carcasse évite que ledit organe presseur n'entre en contact avec ladite paroi du bloc carcasse, et plus particulièrement avec le tronçon d'extrémité de ladite paroi, et notamment évite que l'organe presseur ne frotte contre le tronçon d'extrémité ou plus globalement contre la paroi du bloc carcasse, pendant que l'on transfère ledit organe presseur vers un nouveau secteur angulaire de travail.

Ainsi, à aucun moment, c'est-à-dire ni pendant l'opération de rabattage qui s'effectue par un mouvement basculant en tangage tandis que l'organe presseur se trouve dans un secteur de travail donné autour de l'axe de roulis, ni pendant l'opération de transfert qui permet de déplacer l'organe presseur le long de la direction circonférentielle de la tringle de renfort de sorte à repositionner ledit organe presseur dans un nouveau secteur angulaire de travail autour de l'axe de roulis, ledit organe presseur selon l'invention n'exerce sur le tronçon d'extrémité une quelconque poussée qui serait orientée selon la direction circonférentielle de la paroi cylindrique du bloc carcasse, et plus particulièrement selon la ligne directrice de la tringle de renfort.

Ainsi, le tronçon d'extrémité n'est ni dévié en azimut autour de l'axe de roulis par rapport au tronçon central de la nappe carcasse, ni froissé, ni étiré par torsion dans la direction circonférentielle.

En définitive, l'invention permet donc avantageusement de rabattre le tronçon d'extrémité contre la face intérieure du tronçon central de la paroi du bloc carcasse de manière automatique et progressive, morceau par morceau, secteur angulaire après secteur angulaire, jusqu'à ce que le cumul des secteurs angulaires soumis individuellement au retroussage atteigne, voire dépasse, l'équivalent d'un tour complet autour de l'axe de roulis, de sorte que le tronçon d'extrémité se trouve finalement replié en totalité sur la face interne du tronçon cylindrique central de la paroi du bloc carcasse, et emprisonne ainsi la tringle de renfort sur tout le périmètre de ladite tringle de renfort considéré autour dudit axe de roulis, à l'intérieur d'un pli annulaire de la nappe carcasse, pli qui forme le futur talon du bandage.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

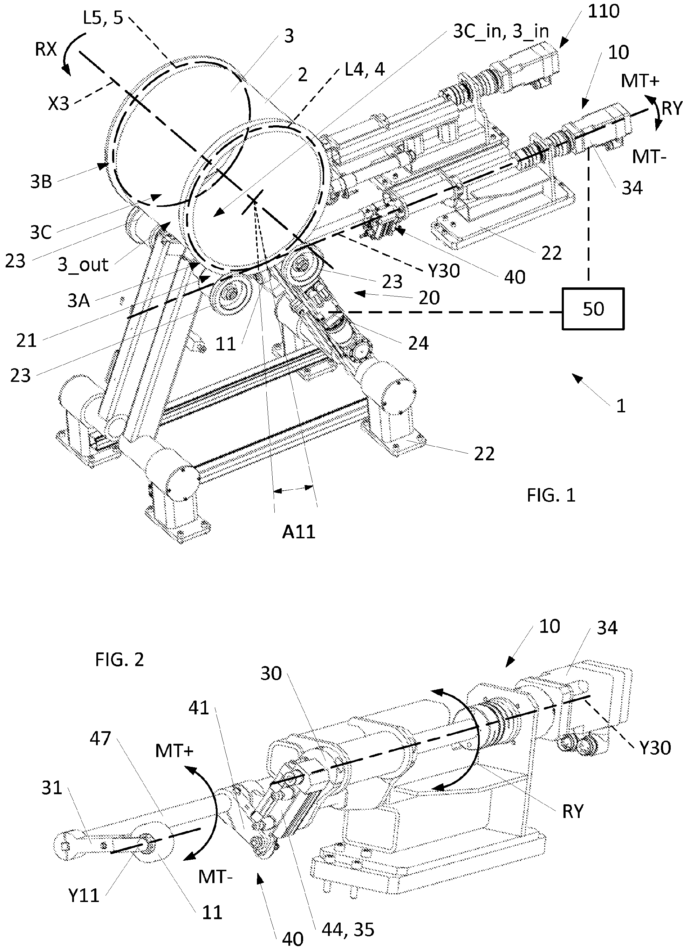

La figure 1 illustre, selon une vue en perspective, un exemple d'installation selon l'invention, qui comprend deux dispositifs de rabattage, l'un destiné à retrousser un premier tronçon d'extrémité de la paroi du bloc carcasse par-dessus et autour d'une première tringle de renfort, et l'autre destiné à retrousser, de préférence simultanément, un second tronçon d'extrémité de cette même paroi de bloc carcasse, opposé axialement au premier tronçon d'extrémité, par-dessus et autour d'une seconde tringle de renfort.
La figure 2 illustre, selon une vue de détail en perspective, un dispositif de rabattage de l'installation de la figure 1, comprenant un seul organe presseur, formé par un galet presseur.

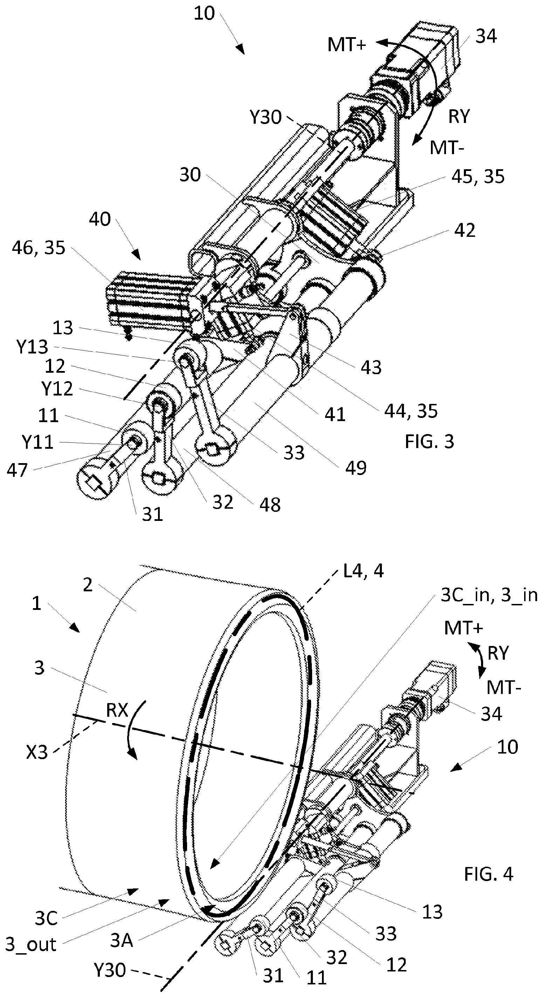

La figure 3 illustre, selon une vue en perspective, une variante de dispositif de rabattage comprenant trois organes presseurs formés chacun par un galet presseur.
La figure 4 illustre, selon une vue de détail en perspective, le dispositif de rabattage à trois galets presseurs de la figure 3, en place face à un bloc carcasse, au sein d'une installation similaire à celle de la figure 1, avec les trois galets presseurs qui se trouvent dans une configuration de retrait, de sorte à permettre une rotation en roulis du bloc carcasse sans interférence avec lesdits galets presseurs.

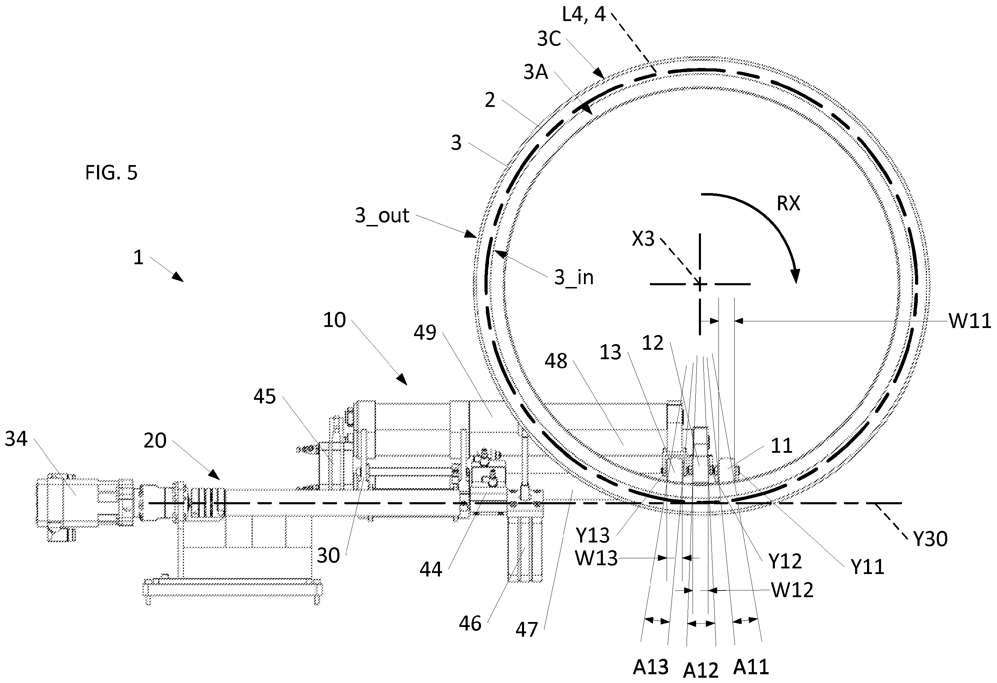

La figure 5 illustre, selon une vue de côté, le positionnement des trois galets presseurs du dispositif de rabattage de la figure 3 autour de l'axe de roulis, chacun dans le secteur angulaire de travail qui lui est propre.

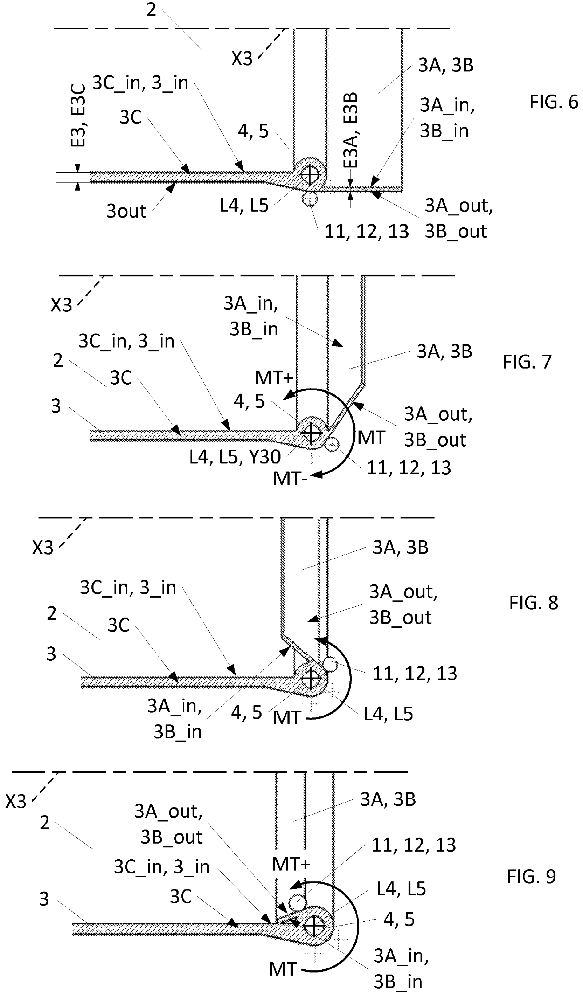

Les figures 6, 7, 8 et 9 illustrent, selon des vues en coupe dans un plan sagittal de la carcasse contenant l'axe de roulis, les phases successives du rabattage progressif du premier tronçon d'extrémité de la paroi du bloc carcasse, lesdites phases pouvant être mises en œuvre soit par plusieurs passes successives effectuées à l'aide d'un même galet presseur unique, soit, de préférence, en une seule et même passe à l'aide de plusieurs galets presseurs qui opèrent simultanément sur des courses en tangage qui sont complémentaires les unes des autres.

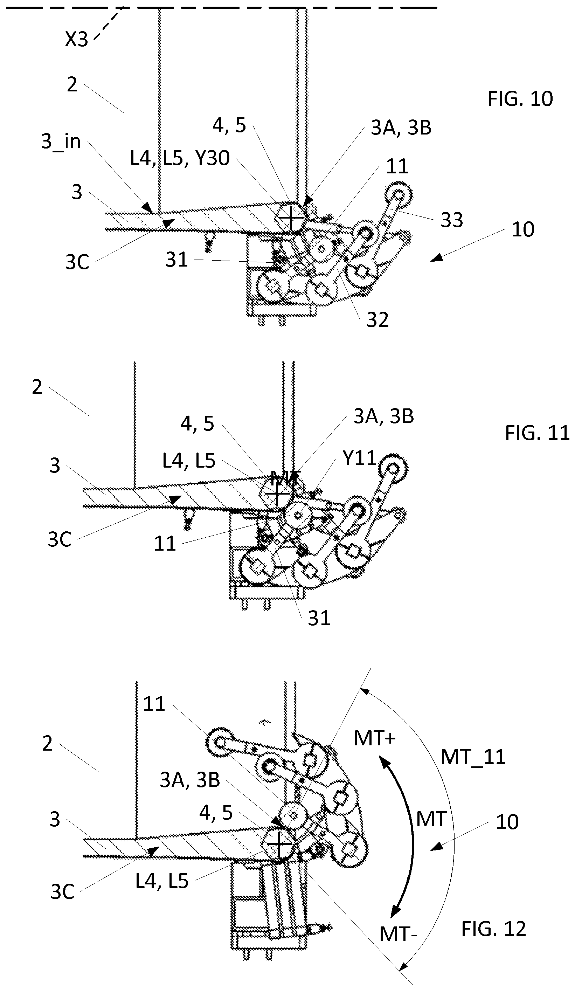

La figure 10 illustre, selon une vue en coupe dans un plan sagittal de la carcasse, contenant l'axe de roulis et normal à l'axe de tangage des galets presseurs, l'installation de la figure 4 avec les trois galets presseurs en configuration de retrait.
La figure 11 illustre, selon la même vue en coupe que la figure 10, l'installation des figures 4 et 10 avec le premier galet presseur engagé en configuration de travail, dans la position de départ du mouvement basculant en tangage, les second et troisième galets presseurs se trouvant encore en configuration de retrait.
La figure 12 illustre, toujours selon la même vue en coupe, l'installation de la figure 11 après exécution de la phase aller du mouvement basculant en tangage, le premier galet presseur se trouvant ainsi dans sa position d'arrivée, après avoir rabattu la portion du tronçon d'extrémité qui lui est assignée.

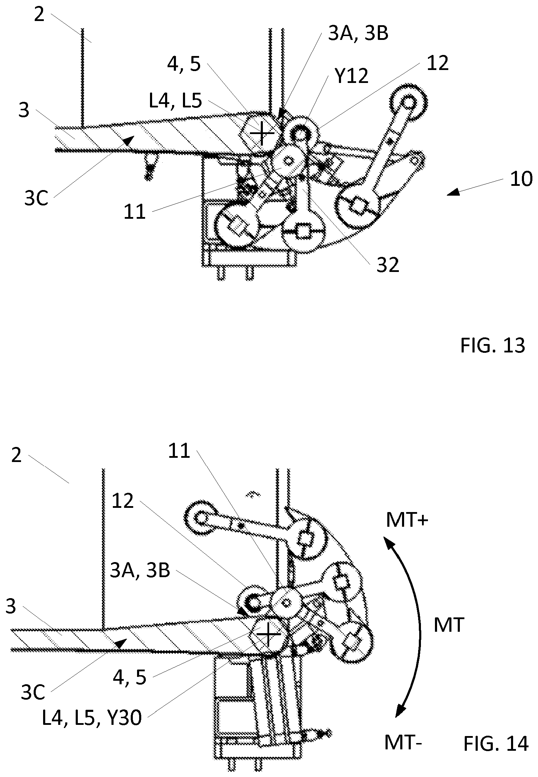

La figure 13 illustre, toujours selon la même vue en coupe, l'installation des figures 10 à 12 en position de départ du mouvement basculant en tangage, avec cette fois le premier galet presseur et le second galet presseur en configuration de travail, seul le troisième galet presseur restant en configuration de retrait.
La figure 14 illustre, toujours selon la même vue en coupe, l'installation de la figure 13 après exécution de la phase aller du mouvement basculant en tangage, le premier galet presseur et le second galet presseur se trouvant ainsi dans leur position d'arrivée respective, après avoir rabattu chacun la portion du tronçon d'extrémité qui leur est assignée.

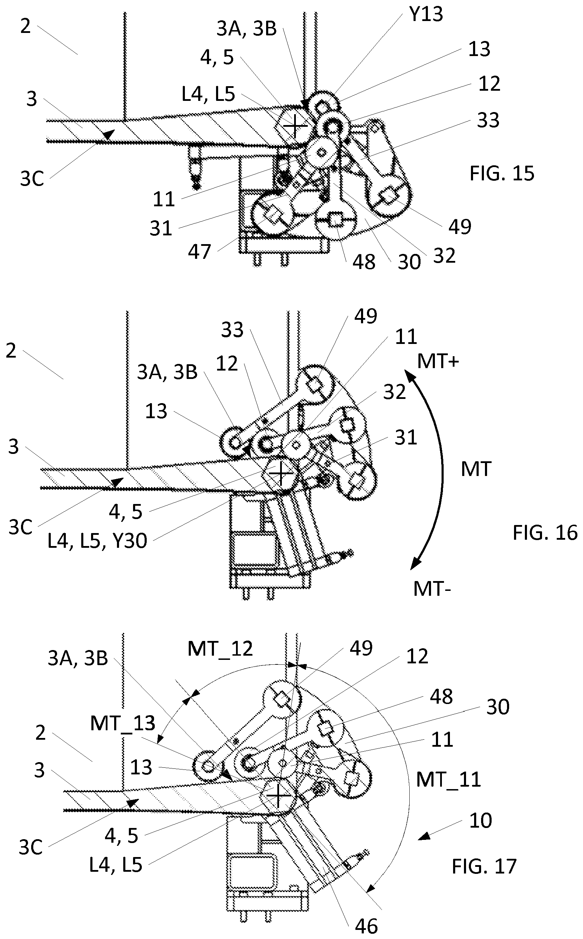

La figure 15 illustre, toujours selon la même vue en coupe, l'installation des figures 10 à 14 en position de départ du mouvement basculant, avec cette fois l'ensemble des premier, second et troisième galets presseurs en configuration de travail, et dans la position de départ du mouvement basculant.
La figure 16 illustre, toujours selon la même vue en coupe, l'installation de la figure 15 en cours de mouvement basculant en tangage, pendant la phase aller.
La figure 17 illustre, toujours selon la même vue en coupe, l'installation des figures 15 et 16 à la fin de l'exécution de la phase aller du mouvement basculant en tangage, les premier, second et troisième galets presseurs se trouvant ainsi chacun dans leur position d'arrivée respective, après avoir rabattu chacun la portion du tronçon d'extrémité qui leur est assignée, dans leur secteur angulaire respectif.

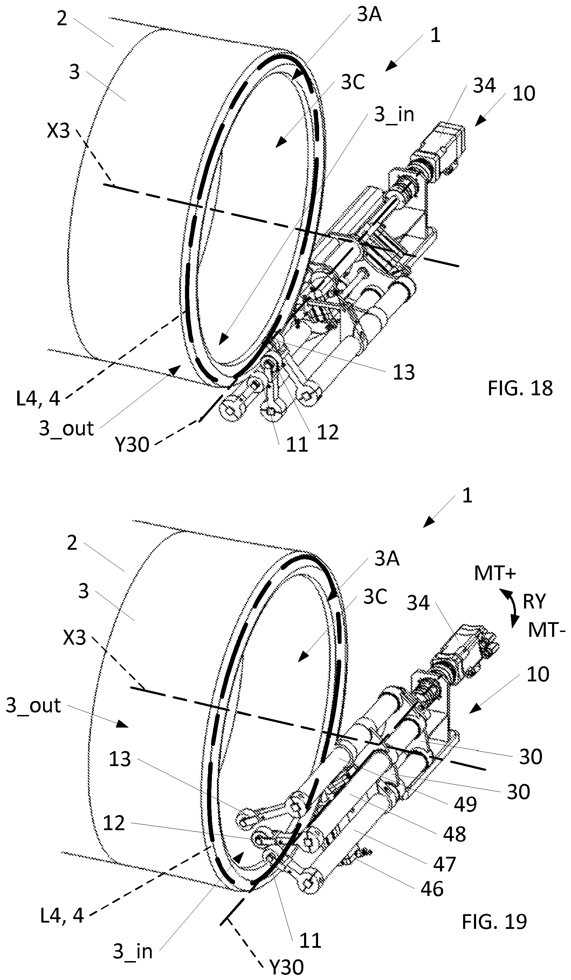

La figure 18 illustre, selon une vue en perspective, l'installation de la figure 15 avec les trois galets presseurs en configuration de travail, et en position de départ du mouvement basculant en tangage.
La figure 19 illustre, selon une vue en perspective, l'installation de la figure 17 avec les trois galets presseurs en position d'arrivée de la phase aller du mouvement basculant.

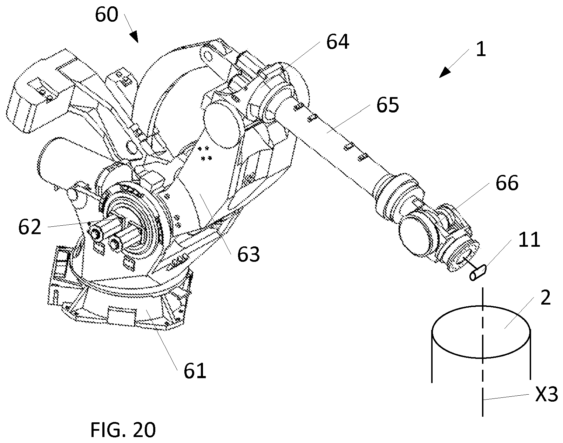

La figure 20 illustre, selon une vue en perspective, une variante d'installation selon l'invention, qui utilise un bras robotisé anthropomorphe pour assurer les différents mouvements de l'organe presseur par rapport au bloc carcasse, c'est-à-dire pour assurer alternativement le mouvement basculant en tangage de l'organe presseur, dans un secteur angulaire de travail, puis le déplacement angulaire incrémental dudit organe presseur autour de l'axe de roulis, pour transférer ledit organe presseur dans le secteur angulaire de travail suivant.

La présente invention concerne une installation 1 de retroussage, qui est destinée à rabattre un tronçon d'extrémité 3A, 3B d'une paroi 3 cylindrique d'un bloc carcasse 2 de bandage autour d'une tringle de renfort 4, 5 dudit bloc carcasse 2.

L'invention concerne donc plus globalement la fabrication de bandages, notamment de bandages pneumatiques, qui sont destinés à équiper des roues de véhicules, et plus particulièrement soit des bandages pneumatiques destinés à équiper les roues de trains d'atterrissage d'avions, soit, préférentiellement, des bandages pneumatiques destinés à équiper des roues d'engins de génie civil.

Le bloc carcasse 2 constitue une partie de l'armature du bandage, qui sera conformée selon une forme toroïdale et dont la couronne radialement externe sera coiffée d'un « bloc sommet » comprenant au moins une bande de roulement destinée à venir en contact avec la route, ainsi que, de préférence, une ou plusieurs structures de renfort additionnelles, sous-jacentes à la bande de roulement, telles que des nappes de renfort et/ou une ou des bandes de renfort enroulées en spires pour former un cerclage dit « frette ».

De façon connue en soi, le bloc carcasse 2 du bandage comprend une première tringle de renfort 4 et une seconde tringle de renfort 5 de forme annulaire, sensiblement inextensibles en longueur, qui viennent chacune renforcer un talon du bandage destiné à la fixation du bandage sur un support de montage, tel qu'une jante. Les bandages concernés par l'invention, notamment les bandages pour engins de génie civil, pourront être dimensionnés pour être montés sur des jantes de diamètre compris entre 33 pouces et 63 pouces.

Les tringles de renfort 4, 5 peuvent être réalisées dans tout matériau présentant un module de traction prédéterminé suffisamment élevé, par exemple à partir de fils métalliques, notamment de fils d'acier, éventuellement revêtus de caoutchouc, ou à partir de fils polymères résistants à la traction, par exemple en aramide, ou bien encore à partir de fils ou de bandes continues composite formés à base de fibres de verre noyées dans de la résine.

Les tringles de renfort 4, 5 pourront être obtenues par exemple en entrelaçant plusieurs fils pour former un tore tressé possédant le diamètre souhaité qui correspond au diamètre de la jante sur laquelle sera monté le bandage, ou bien encore en enroulant lesdits fils en spires juxtaposées et superposées pour former un tore du diamètre souhaité.

Le bloc carcasse 2 comprend également au moins une nappe carcasse qui est formée d'une nappe à base de caoutchouc dans laquelle sont noyés une pluralité de fils de renfort qui s'étendent parallèlement les uns aux autres. Ladite nappe carcasse est enroulée sur elle-même de sorte à former une structure tubulaire de la paroi 3 du bloc carcasse 2, et s'étend depuis la première tringle de renfort 4 jusqu'à la seconde tringle de renfort 5 de sorte que chacun des fils de renfort de ladite nappe carcasse relie la première tringle de renfort 4 à la seconde tringle de renfort 5, qui est coaxiale à, et distante axialement de, la première tringle de renfort 4.

Le bloc carcasse 2 comprend de préférence en outre certains éléments additionnels, tels qu'une nappe d'étanchéité, généralement en butyle, qui assure l'étanchéité à l'air de la paroi 3, et donc de la cavité de gonflage du bandage pneumatique que délimite ladite paroi 3, ou bien encore des coussins de gomme qui sont destinés à former un rembourrage protecteur autour des tringles de renfort 4, 5, dans les talons du bandage.

Par commodité de description, bien que le bloc carcasse 2 comprenne généralement deux tringles de renfort 4, 5, à raison d'une tringle de renfort 4, 5 pour chaque talon du bandage, on pourra faire référence dans ce qui suit à l'une seule desdites tringles de renfort, étant bien entendu que ce qui sera décrit pour l'une desdites tringles de renfort 4, 5 pourra être dupliqué et/ou transposé *mutatis mutandis* pour l'autre tringle de renfort.

On notera également que, sur certains modèles de bandages, on peut prévoir deux tringles de renfort 4, 5 dans chaque talon, soient quatre tringles de renfort au total dans le bloc carcasse 4, afin de disposer de renforts annulaires de deux diamètres différents dans chaque talon. L'invention reste toutefois applicable quel que soit le nombre de tringles de renfort 4, 5 qui sont situées dans un même talon, et donc à une même extrémité axiale du bandage, et autour desquelles on replie un même tronçon d'extrémité 3A, 3B, pour enfermer la ou les tringles de renfort 4, 5 concernées dans un même pli de la paroi 3, et plus particulièrement dans un même pli de la nappe carcasse.

Géométriquement, et tel que cela est notamment visible sur les figures 1, 4, 18 et 19, la paroi 3 cylindrique s'étend le long et autour d'un axe central X3 dit « axe de roulis » X3 et la tringle de renfort 4, 5 s'étend selon une ligne génératrice L4, L5 qui forme un anneau autour dudit axe de roulis X3.

L'axe de roulis X3 correspond à l'axe central commun aux deux tringles de renfort 4, 5 et à la paroi 3 du bandage 2, paroi 3 qui présente une forme de révolution centrée sur ledit axe de roulis X3.

En pratique, ledit axe de roulis X3 coïncide avec le futur axe de rotation du bandage, et donc avec le futur axe de rotation de la roue équipée dudit bandage.

La paroi 3 cylindrique présente un tronçon central 3C cylindrique qui correspond à la portion de ladite paroi 3 qui s'étend le long de l'axe de roulis 3 depuis la première tringle de renfort 4 jusqu'à la seconde tringle de renfort 5. La paroi 3 présente également au moins un premier tronçon d'extrémité 3A, cylindrique, qui prolonge le tronçon central 3C cylindrique en faisant saillie axialement au-delà de la première tringle de renfort 4. De préférence, la paroi 3 présente en outre, à son extrémité axialement opposée, un second tronçon d'extrémité 3B, cylindrique, qui prolonge le tronçon central 3C cylindrique en faisant saillie axialement au-delà de la seconde tringle de renfort 5.

Par commodité de description, dans ce qui suit, on pourra considérer indifféremment le premier tronçon d'extrémité 3A et le second tronçon d'extrémité 3B, dans la mesure où ce qui est valable pour l'un, considéré individuellement, est de préférence valable également pour l'autre.

En pratique, le tronçon d'extrémité 3A, 3B est formé d'un seul tenant avec au moins un élément structurel du tronçon central 3C.

Plus particulièrement, le tronçon d'extrémité 3A, 3B contient de préférence au moins, et le cas échéant contient exclusivement, une portion de la nappe carcasse qui est formée d'un seul tenant avec la portion de ladite nappe carcasse qui est contenue dans le tronçon central 3C et dont les fils de renfort relient la première tringle de renfort 4 à la seconde tringle de renfort 5. Le tronçon d'extrémité 3A, 3B contient donc, voire correspond exclusivement, à un pan annulaire d'extrémité de la nappe carcasse du bloc carcasse 2, qui dépasse axialement en saillie par rapport à la tringle de renfort 4, 5 qui est la plus proche axialement de la lisière de ladite nappe carcasse, de sorte que ledit pan s'étend depuis la tringle de renfort considérée 4, 5 jusqu'à la lisière de la nappe carcasse, qui forme l'extrémité axiale de ladite nappe carcasse la plus proche axialement de ladite tringle de renfort 4, 5.

On notera que les tronçons d'extrémité 3A, 3B des blocs carcasse 2 qui peuvent être traités selon l'invention, et notamment qui sont destinés aux bandages pneumatiques pour engins de génie civil, et plus particulièrement à des bandages pneumatiques de génie civil destinés à être montés sur des jantes de diamètre compris entre 33 pouces et 63 pouces, présentent de préférence une grande longueur axiale à rabattre, typiquement comprise entre 5 cm et 40 cm, et ce notamment pour assurer la robustesse du bandage au regard des chocs, des déformations et des charges élevées que ledit bandage sera amené à subir dans ses conditions normales d'utilisation.

Par convention, on désignera par direction « axiale » une direction parallèle à la direction de l'axe considéré, ici l'axe de roulis X3.

Par convention, on désignera par direction « radiale » une direction perpendiculaire à l'axe de roulis X3, et donc plus particulièrement une direction portée par un rayon de la paroi 3 cylindrique.

Ainsi, tel que cela est visible notamment sur les figures 1, 4 et 6 à 9, la « face radialement interne » 3_in de la paroi 3 cylindrique, et plus particulièrement la face radialement interne 3C_in du tronçon central 3C et les faces radialement internes 3A_in, 3B_in des tronçons d'extrémité 3A, 3B, désigneront ainsi les faces, ici concaves, de la paroi 3 cylindrique qui sont initialement, avant l'opération de retroussage, les plus proches radialement de l'axe de roulis X3, et donc qui sont initialement orientées vers l'intérieur du bloc carcasse 2.

De même, la « face radialement externe » 3_out de la paroi 3, et plus particulièrement les faces radialement externes 3A_out, 3B_out des tronçons d'extrémité 3A, 3B correspondront aux faces qui sont initialement les plus éloignées radialement de l'axe de roulis X3, et qui forment donc initialement les faces apparentes convexes du bloc carcasse 2, orientées vers l'extérieur dudit bloc carcasse 2.

A titre indicatif, l'épaisseur E3 de la paroi 3, considérée selon la direction radiale, sera globalement comprise entre 1 mm et 25 mm, selon la nature du bandage visé. Plus particulièrement l'épaisseur E3C de ladite paroi 3 dans le tronçon central 3C sera de préférence comprise entre 4 mm et 25 mm, tandis que l'épaisseur de la paroi E3A, E3B dans le tronçon d'extrémité 3A, 3B concerné, de préférence plus fine que la paroi du tronçon central 3C, sera de préférence comprise entre 1 mm et 10 mm. A titre indicatif, un bandage destiné à un véhicule de tourisme pourra présenter de préférence une épaisseur E3C de paroi dans le tronçon central 3C comprise entre 4 mm et 8 mm, et une épaisseur E3A, E3B moindre dans le tronçon d'extrémité, comprise entre 1 mm et 3 mm. Dans le cas d'un pneu de génie civil, ces épaisseurs seront de préférence respectivement comprises entre 15 mm et 25 mm pour E3C, et 6 mm à 10 mm pour E3A, E3B.

De préférence, la ligne génératrice L4, L5 de chaque tringle de renfort 4, 5 est contenue dans un plan normal à l'axe de roulis X3, de sorte que la ligne génératrice L4, L5, selon laquelle la tringle de renfort 4, 5 considérée s'étend en longueur, est orientée selon la direction circonférentielle du bloc carcasse 2, et plus globalement selon la direction circonférentielle du bandage.

Par « circonférentielle », on désignera une direction orthoradiale, c'est-à-dire portée par un vecteur directeur qui, au point considéré, est d'une part perpendiculaire au rayon qui est issu de l'axe central considéré, ici l'axe de roulis X3, et qui joint ledit point considéré, et d'autre part orthogonal audit axe central considéré, c'est-à-dire contenu dans un plan normal audit axe, ici donc contenu dans un plan normal à l'axe de roulis X3.

Selon l'invention, l'installation comprend tout d'abord un dispositif de rabattage 10 qui comporte au moins un organe presseur 11, 12, 13, tel qu'un galet presseur 11, 12, 13, et qui est agencé pour venir appliquer ledit organe presseur 11, 12, 13 contre la face radialement externe 3A_out, 3B_out du tronçon d'extrémité 3A, 3B, dans un secteur angulaire A11, A12, A13 de la paroi 3 cylindrique dit « secteur angulaire de travail » A11, A12, A13 qui correspond, tel que cela est bien visible sur la figure 5, à une fraction de la circonférence du tronçon d'extrémité 3A, 3B autour de l'axe de roulis X3, et pour faire exécuter audit organe presseur 11, 12, 13 un mouvement basculant MT en tangage autour de la ligne génératrice L4, L5 de la tringle de renfort 4, 5, de sorte que l'organe presseur 11, 12, 13 rabatte vers la face radialement interne 3_in de la paroi 3 cylindrique du bloc carcasse 2, autour de la tringle de renfort 4, 5, la portion du tronçon d'extrémité 3A, 3B qui est située dans le secteur angulaire de travail A11, A12, A13 concerné.

L'organe presseur 11, 12, 13 pourra prendre toute forme appropriée. Ainsi, par exemple, l'organe presseur 11, 12, 13 pourrait prendre la forme d'une spatule à l'extrémité recourbée, agencée pour venir glisser sur la face externe 3A_out, 3B_out du tronçon d'extrémité 3A, 3B, un peu à la manière de la semelle d'un fer à repasser, au fur et à mesure du mouvement de basculement en tangage MT. Bien entendu, la spatule sera alors réalisée dans, ou recouverte par, un matériau qui empêche le caoutchouc cru de la paroi 3 d'adhérer à ladite spatule, et ce afin de permettre le libre glissement de ladite spatule contre la surface du tronçon d'extrémité 3A, 3B.

Toutefois, de façon particulièrement préférentielle, l'organe presseur 11, 12, 13 sera formé par un galet qui sera monté en rotation, de préférence en libre rotation, autour de son axe central Y11, Y12, Y13, sensiblement tangent à la direction circonférentielle dans le secteur angulaire de travail A11, A12, A13, de sorte que ledit galet presseur 11, 12, 13 puisse rouler sur la face externe 3A_out, 3B_out du tronçon d'extrémité 3A, 3B, afin que le mouvement basculant en tangage MT puisse générer un rouletage dudit tronçon d'extrémité 3A, 3B contre la tringle de renfort 4, 5 et contre la face interne 3_in de la paroi 3 du bloc carcasse 2. Par commodité de description, on pourra donc assimiler l'organe presseur 11, 12, 13 à un galet presseur dans ce qui suit, et utiliser les mêmes références 11, 12, 13 pour désigner indifféremment ces éléments.

Dans tous les cas, la finalité du rabattage est de venir appliquer et coller, grâce au collant naturel (« tack », en anglais) du caoutchouc cru, le tronçon d'extrémité 3A, 3B contre la face interne 3_in de la paroi 3 du bloc carcasse, et ainsi de replier la nappe carcasse sur elle-même afin d'emprisonner la tringle de renfort 4, 5 dans le pli de la nappe carcasse ainsi formé. Ceci permettra notamment un ancrage particulièrement solide de la nappe carcasse, ou le cas échéant des nappes carcasse si le bloc carcasse 2 comprend plusieurs nappes carcasse superposées, à chaque tringle de renfort 4, 5.

On notera que le rouletage au moyen d'un galet presseur 11, 12, 13 est un moyen particulièrement efficace de presser le tronçon d'extrémité 3A, 3B contre la face interne 3_in de la paroi 3, et plus particulièrement contre la face interne 3C_in du tronçon central 3C, et de chasser l'air susceptible d'être pris entre ledit tronçon d'extrémité 3A, 3B et la face interne 3_in de la paroi 3. Ainsi, le rouletage permet de faire parfaitement adhérer la face radialement interne 3A_in, 3B_in du tronçon d'extrémité contre la face radialement interne 3C_in du tronçon central, selon un assemblage régulier et sans défaut.

On notera également que, en fonction des dimensions et de la rigidité du tronçon d'extrémité 3A, 3B, il est envisageable de procédé au rabattage complet dudit tronçon d'extrémité soit en une seule passe, soit au contraire en plusieurs passes successives.

Si l'on opte pour plusieurs passes successives, on effectuera d'abord une première passe qui consiste à rabattre le tronçon d'extrémité 3A, 3B sur toute sa circonférence autour de l'axe de roulis X3, mais seulement partiellement en tangage autour de la tringle de renfort 4, 5, afin d'éviter de causer une déchirure dudit tronçon d'extrémité 3A, 3B. Ladite première passe consistera donc à répéter le mouvement basculant en tangage MT autant de fois que nécessaire dans autant de secteurs angulaires de travail A11, A12, 13 que nécessaire pour que le cumul des secteurs angulaires de travail A11, A12, A13 traités correspondent à au moins un tour complet autour de l'axe de roulis X3. On effectuera ensuite une ou plusieurs passes suivantes, au cours de chacune desquelles on réalise de nouveau, dans l'ensemble des secteurs angulaires nécessaires pour couvrir un nouveau tour complet en roulis à chaque passe, une répétition de mouvements basculants en tangage MT, qui vont plus loin en tangage à chaque nouvelle passe, de sorte à accentuer le pliage du tronçon d'extrémité 3A, 3B au fil des passes successives, jusqu'à venir coller, lors de la dernière passe, la face radialement interne 3A_in du tronçon d'extrémité contre la face radialement interne 3_in de la paroi 3, et plus précisément contre la face radialement interne 3C_in du tronçon central 3C.

Bien entendu, la taille des secteurs angulaires de travail, c'est-à-dire l'étendue angulaire autour de l'axe de roulis X3 du ou des secteurs angulaires de travail A11, A1, A13, devra être relativement réduite, c'est-à-dire représenter une fraction relativement petite de la circonférence de la paroi 3, et donc de la circonférence de la tringle de renfort 4, 5, de manière à ce que le mouvement de basculement en tangage MT exécuté par l'organe presseur 11, 12, 13 génère un effort de pliage qui soit orienté de sorte à être contenu, ou quasiment contenu, dans un plan radial, sans, ou quasiment sans, composante de poussée dans la direction circonférentielle.

A cet effet, chaque secteur angulaire de travail A11, A12, A13 attaché à un organe presseur 11, 12, 13 représentera de préférence une fraction de moins de 1/10, moins de 1/20, moins de 1/30, voire moins de 1/45 de la circonférence du tronçon d'extrémité 3A, 3B, c'est-à-dire mesurera de préférence moins de 36 degrés, mois de 18 degrés, moins de 12 degrés, voire moins de 8 degrés autour de l'axe de roulis X3. Selon une possibilité de réalisation préférentielle, le ou chaque secteur angulaire de travail A11, A12, A13 mesurera entre 1 degré et 5 degrés.

En outre, lorsque l'on utilise plusieurs organes presseurs 11, 12, 13 occupant chacun un secteur angulaire de travail A11, A12, A13 distinct, la couverture angulaire cumulée desdits secteurs angulaires de travail, c'est-à-dire la somme des couvertures angulaires individuelles respectives de chacun des secteurs angulaires de travail, représente une fraction de la circonférence du tronçon d'extrémité 3A, 3B autour de l'axe de roulis X3, plus préférentiellement moins de 60 degrés, moins de 30 degrés, voire moins de 15 degrés. Ainsi, à chaque itération, seule ladite fraction de la circonférence du tronçon d'extrémité 3A, 3B couverte par le ou les secteurs angulaires de travail A11, A12, A13 est soumise au pliage actif par le ou les organes presseurs 11, 12, 13, le reste de la circonférence du tronçon d'extrémité 3A, 3B n'étant pas affecté lors de l'itération concernée.

La largeur W11, W12, W13 de l'organe presseur 11, 12, 13, selon laquelle ledit organe presseur s'applique sur la portion de la circonférence du tronçon d'extrémité 3A, 3B qui lui est affectée, et qui correspond donc ici plus préférentiellement à la largeur du galet presseur 11, 12, 13 mesurée le long de l'axe central Y11, Y12, Y13 dudit galet, pourra être adaptée en fonction du diamètre du bloc carcasse 2, et sera de préférence comprise entre 10 mm et 15 mm.

On notera par ailleurs que, tel que cela est visible sur la figure 1, l'installation 1 pourra comporter deux dispositifs de rabattage 10, 110, de préférence similaires dans leur conception et leur fonctionnement, à raison d'un dispositif de rabattage 10, 110 pour chaque tringle de renfort 4, 5, de sorte que l'on pourra avantageusement replier simultanément les deux tronçons d'extrémité 3A, 3B opposés de la paroi 3 contre le tronçon central 3C de ladite paroi au cours d'un même cycle.

Par commodité de description, on fera référence à un seul dispositif de rabattage 10 dans ce qui suit, étant bien entendu que les considérations relatives audit dispositif de rabattage 10 sont transposables, le cas échéant, à l'autre dispositif de rabattage 110.

Selon une possibilité de réalisation, le dispositif de rabattage 10 pourra comporter un seul organe presseur 11, et plus particulièrement un seul galet presseur 11, tel que cela est illustré sur les figures 1 et 2, et par conséquent traiter un seul secteur angulaire de travail A11 à la fois.

Cependant, selon une autre possibilité, préférentielle, de réalisation, le dispositif de rabattage comprend, tel que cela est notamment visible sur les figure 3, 5 et 18, plusieurs organes presseurs 11, 12, 13, ici plus préférentiellement plusieurs galets presseurs 11, 12, 13, qui sont décalés angulairement les uns par rapport aux autres, en azimut autour de l'axe de roulis X3, afin de venir en prise sur la face radialement externe 3A_out, 3B_out du tronçon d'extrémité 3A, 3B dans des secteurs angulaires de travail A11, A12, A13 différents qui se succèdent autour de l'axe de roulis X3, le long de la ligne génératrice L4, L5 de la tringle de renfort 4, 5, tel que cela est notamment bien visible sur la figure 5.

Avantageusement, grâce à cette multiplication des organes presseurs 11, 12, 13, répartis autour de l'axe de roulis X3, et donc en quelque sorte déphasés en roulis les uns par rapport aux autres autour de l'axe de roulis X3, l'installation 1 parvient à traiter simultanément, à une même extrémité axiale de la paroi 3, c'est-à-dire autour de la même tringle de renfort 4, 5, plusieurs secteurs de travail A11, A12, A13, en exécutant les mouvements basculants en tangage MT des différents organes presseurs 11, 12, 13 simultanément dans chacun desdits secteurs angulaires de travail A11, A12, A13. De la sorte, les différents organes presseurs 11, 12, 13 agissent en temps masqué les uns par rapport aux autres. Par conséquent, moins d'itérations sont nécessaires pour rabattre le tronçon d'extrémité 3A, 3B sur un tour complet autour de l'axe de roulis X3, ce qui permet donc de réduire globalement le temps de cycle correspondant, c'est-à-dire la durée d'une passe.

On pourrait éventuellement envisager, selon un mode de mise en œuvre, que chacun des plusieurs organes presseurs 11, 12, 13 suive, chacun dans son secteur angulaire de travail A11, A12, A13, une course angulaire en tangage identique, partant d'une même position de départ en tangage par rapport à ligne directrice L4, L5 de la tringle de renfort pour arriver à une même position d'arrivée en tangage que l'organe presseur immédiatement voisin, de sorte que chaque organe presseur 11, 12, 13 procéderait exactement à la même amplitude de pliage que les autres organes presseurs.

En pareil cas, il pourrait être avantageux de répartir de façon égale les organes presseurs autour de l'axe de roulis X3, par exemple à 120 degrés les uns des autres dans le cas de trois organes presseurs, de sorte que l'on obtiendrait l'équivalent d'une passe de rabattage sur un tour complet du tronçon d'extrémité 3A, 3B autour de l'axe de roulis X3 après avoir fait traiter par chaque organe presseur 11, 12, 13 suffisamment de secteurs angulaires de travail pour couvrir l'équivalent de 1/N tour autour de l'axe de roulis X3, où N désigne le nombre d'organes presseurs.

En revanche, si, dans un tel mode de mise en œuvre, une seule passe n'est pas suffisante pour rabattre totalement le secteur d'extrémité 3A, 3B en tangage autour de la ligne génératrice L4, L5 de la tringle de renfort 4, 5, alors il faudrait réitérer, autant de fois que nécessaire, une passe similaire supplémentaire sur 1/N tour autour de l'axe de roulis X3, en décalant à chaque nouvelle passe la position d'arrivée en tangage (et si besoin la position de départ en tangage) des organes presseurs 11, 12, 13, afin d'accentuer le rabattage à chaque nouvelle passe.

Selon un autre mode de mise en œuvre préférentiel, qui pourra être préféré au précédent notamment parce que ledit mode de mise en œuvre permet un agencement particulièrement compact de la pluralité des organes presseurs 11, 12, 13 et plus globalement du dispositif de rabattage 10, et garantit l'efficacité et la progressivité du rabattage du tronçon d'extrémité 3A, 3B, lesdits plusieurs organes presseurs 11, 12, 13 présentent des plages de course en tangage autour de la ligne génératrice L4, L5 qui sont complémentaires les unes des autres, de sorte que chaque organe presseur 11, 12, 13 accentue à son tour, par une contribution propre MT_11, MT_12, MT_13, le pliage du tronçon d'extrémité 3A, 3B par-dessus et autour de la tringle de renfort 4, 5, vers la face radialement interne 3_in de la paroi 3 du bloc carcasse 2, tel que cela est visible notamment sur la figure 17.

En d'autres termes, les positions d'arrivée en tangage des différents organes presseurs 11, 12, 13 successifs sont avantageusement décalées en tangage les unes par rapport aux autres, autour de la ligne directrice L4, L5, dans le sens du mouvement basculant MT en tangage qui va vers la face interne 3_in de la paroi, de sorte que les courses angulaires en tangage respectives desdits organes presseurs 11, 12, 13 autour de la tringle de renfort 4, 5 sont également décalées les unes par rapport aux autres, si bien que chaque organe presseur 11, 12, 13 va plus loin en tangage, vers l'intérieur de la paroi 3, que l'organe presseur 11, 12, 13 qui le précède autour de l'axe de roulis, et donc rapproche davantage le tronçon d'extrémité 3A, 3B de la face radialement interne 3C_in du tronçon central 3C.

De préférence, il en va de même également pour les positions de départ des organes presseurs 11, 12, 13, c'est-à-dire que lesdites positions de départ en tangage des organes presseurs sont, tout comme les positions d'arrivée en tangage, décalées en tangage les unes par rapport aux autres, autour de la ligne directrice L4, L5, dans le sens du mouvement basculant MT en tangage qui va vers la face interne 3_in de la paroi, de sorte que la position de départ d'un organe presseur 12, 13 est plus proche de l'intérieur du tronçon central 3, en suivant la trajectoire impartie par le mouvement basculant en tangage MT, que la position de départ de l'organe presseur 11, 12 qui le précède.

La course angulaire totale disponible en tangage autour de la ligne génératrice L4, L5 peut donc être relativement importante, et avantageusement divisée en autant de « sous-courses » en tangage que l'on compte d'organes presseurs 11, 12, 13. De la sorte, il est possible de réaliser, au cours d'une même passe de rabattage, c'est-à-dire au cours d'un même tour complet autour de l'axe de roulis X3, un pliage progressif mais complet du tronçon d'extrémité 3A, 3B autour de la tringle de renfort 4, 5 et ce jusqu'à plaquer entièrement le tronçon d'extrémité 3A, 3B, sur toute la circonférence dudit tronçon d'extrémité 3A, 3B autour de l'axe de roulis X3 et sur toute la longueur axiale dudit tronçon d'extrémité 3A, 3B, depuis la tringle de renfort 4, 5 jusqu'à la lisière dudit tronçon d'extrémité 3A, 3B, contre la face radialement interne 3C_in du tronçon central 3C.

La multiplication des organes presseurs 11, 12, 13 ainsi déphasés en tangage permet avantageusement de cumuler les courses utiles desdits organes presseurs au cours d'une même passe, et ainsi de bénéficier d'une course en tangage totale qui est particulièrement longue et en particulier qui est suffisante pour rabattre convenablement et en totalité le tronçon d'extrémité 3A, 3B, y compris si celui-ci présente une importante longueur axiale.

Avantageusement, chaque organe presseur 11, 12, 13 intervient dans son propre secteur angulaire de travail A11, A12, A13 exclusivement, et prend en charge la portion correspondante du tronçon d'extrémité 3A, 3B sur une course en tangage qui correspond uniquement à sa contribution propre MT_11, MT_12, MT_13.

De la sorte, chacun des organes presseurs 12, 13 qui viennent à la suite du premier organe presseur 11 poursuit, à son tour, le travail de pliage exécuté par le précédent organe presseur 11, 12, en reprenant ledit travail de pliage à partir de la position de tangage où avait pris fin la contribution propre MT_11, MT_12 dudit précédent organe presseur.

De ce fait, l'opération de pliage est avantageusement progressive, et par conséquent respectueuse du tronçon d'extrémité 3A, 3B, qui ne subit ainsi ni déchirure, ni faux-pli, et ce tout en permettant malgré tout un pliage complet en une seule passe, c'est-à-dire en un seul tour complet des organes presseurs 11, 12, 13 autour de l'axe de roulis X3.

De surcroît, la subdivision de la course angulaire totale en tangage permise par la multiplication des organes presseurs et le déphasage en tangage de ces derniers permet de se satisfaire d'une amplitude individuelle de course en tangage de chacun des organes presseurs qui est relativement restreinte, ce qui minimise le temps nécessaire pour effectuer chaque mouvement basculant MT en tangage. De manière cumulée, ceci permet par conséquent de minimiser le temps de cycle, c'est-à-dire la durée nécessaire pour effectuer la passe considérée, et donc, plus globalement, la durée nécessaire pour rabattre complètement le tronçon d'extrémité 3A, 3B sur l'intérieur de la paroi 3.

On notera que le rendement du dispositif de rabattage 10, et plus globalement de l'installation 1, est optimisé lorsque l'on combine, pour un jeu de plusieurs organes presseurs 11, 12, 13, à la fois une implantation déphasée en roulis desdits organes presseurs 11, 12, 13, qui permet de traiter simultanément plusieurs secteurs angulaires de travail A11, A12, A13, et une implantation déphasée en tangage, autour de la ligne génératrice L4, L5, et donc autour de l'axe de basculement en tangage desdits organes presseurs 11, 12, 13, qui permet de réaliser en une même passe un pliage progressif et complet du tronçon d'extrémité 3A, 3B, en plusieurs étapes successives de tangage, chacune réalisée dans un secteur angulaire de travail A11, A12, A13 par l'un des organes presseurs 11, 12, 13 correspondant, selon la contribution MT_11, MT_12, MT_13 qui est propre audit organe presseur 11, 12, 13 et qui va au-delà de la contribution propre qui avait été apportée par l'organe presseur précédent.

Par convention, pour définir les positions angulaires de départ et d'arrivée, et par conséquent les amplitudes de course en tangage des organes presseurs 11, 12, 13, et plus particulièrement la contribution propre MT_11, MT_12, MT_13 de chaque organe presseur 11, 12, 13, on pourra considérer un plan de référence dit « plan bissecteur » qui correspond au plan radial qui contient d'une part l'axe de roulis X3 et d'autre part la bissectrice du secteur angulaire de travail A11, A12, A13 occupé par l'organe presseur 11, 12, 13 considéré lorsque ledit organe presseur 11, 12, 13 se trouve dans sa position de départ, au contact du tronçon d'extrémité 3A, 3B, plan bissecteur qui est donc normal au vecteur directeur tangent à la ligne génératrice L4, L5 et donc à la direction circonférentielle au point considéré, puis prendre comme origine d'un repère associé audit plan bissecteur le point d'intersection de la ligne génératrice L4, L5 de la tringle de renfort 4, 5 avec ledit plan bissecteur, et enfin considérer la position angulaire de l'organe presseur 11, 12, 13 considéré comme étant la position, dans ledit repère associé au plan bissecteur, d'un point choisi de l'organe presseur considéré 11, 12, 13, et plus particulièrement de l'intersection de l'axe central Y11, Y12, Y13 du galet presseur 11, 12, 13 avec ledit plan bissecteur, tel que cela est illustré, ici en référence au premier galet presseur 11, sur les figures 12 et 17.

De préférence, l'organe presseur 11, et le cas échéant chacun des plusieurs organes presseurs 11, 12, 13 apporte, lors de son mouvement basculant MT en tangage, une contribution propre MT_11, MT_12, MT_13 au rabattage du tronçon d'extrémité, laquelle contribution propre MT_11, MT_12, MT_13 correspond à une amplitude de déplacement angulaire de l'organe presseur 11, 12, 13 considéré, en tangage autour de la ligne génératrice L4 de la tringle de renfort, qui est au moins égale à 30 degrés, voire au moins égale à 60 degrés, et de préférence inférieure ou égale à 120 degrés, pour le ou chaque organe presseur 11, 12, 13 considéré.

En mettant en œuvre une contribution propre égale ou supérieure à 30 degrés, la course ou la portion de la course en tangage de l'organe presseur 11, 12, 13 considéré, qui permet audit organe presseur de prendre activement en charge un pliage effectif du tronçon d'extrémité 3A, 3B, est suffisamment étendue en tangage pour assurer une action de déviation et/ou de rouletage significative dudit organe presseur 11, 12, 13 sur ledit tronçon d'extrémité 3A, 3B.

En privilégiant par ailleurs une contribution propre inférieure à 120 degrés, la course en tangage de l'organe presseur reste cependant suffisamment restreinte pour éviter de causer un froissement, un faux pli, voire une déchirure du tronçon d'extrémité 3A, 3B qui se produirait dans le secteur angulaire de travail A11, A12, A13 considéré ou bien à la limite entre ledit tronçon angulaire de travail A11, A12, A13 et une portion voisine dudit tronçon d'extrémité 3A, 3B, occupant un secteur angulaire adjacent.

De préférence, les courses individuelles totales en tangage de chacun des organes presseurs 11, 12, 13 seront légèrement chevauchantes l'une avec la suivante, de sorte que le second organe presseur 12 viendra au contact de la face externe 3A_out, 3B_out du tronçon d'extrémité dans une position de départ en tangage qui se situe légèrement en amont de la position d'arrivée en tangage du premier organe presseur 11 dans le sens du mouvement basculant MT (ici dans le sens anti-horaire sur les figures 6 à 17), et, de même, le troisième organe presseur 13 viendra au contact du tronçon d'extrémité 3A, 3B dans une position de départ en tangage qui se situe légèrement en amont de la position d'arrivée en tangage du second organe presseur 12 dans le sens du mouvement de basculant.

De la sorte, on sera certain que chaque organe presseur 12, 13 reprend convenablement, avec une certaine marge de sécurité, l'action de pliage réalisée par l'organe presseur 11, 12 qui l'aura directement précédé.

A titre préférentiel, l'étendue du chevauchement en tangage entre les courses de deux organes presseurs 11, 12, 13 consécutifs pourra être comprise entre 3 degrés et 15 degrés, de préférence entre 5 degrés et 10 degrés, et par exemple égale à 5 degrés.

Ceci étant, l'étendue de chevauchement en tangage d'un organe presseur 11, 12, 13 avec l'un et/ou l'autre de ses voisins, c'est-à-dire avec l'un ou l'autre du ou des organes presseurs qui le précèdent et/ou le suivent immédiatement autour de l'axe de roulis X3, sera de préférence strictement inférieure à la contribution propre MT_11, MT_12, MT13 de chaque organe presseur, de sorte que, au sein de la course individuelle totale en tangage de l'organe presseur, c'est-à-dire au sein de la distance angulaire parcourue par ledit galet depuis sa position de départ jusqu'à sa position d'arrivée, la contribution propre dudit galet représente au moins 50%, de préférence au moins 75%, voire au moins 90% de ladite distance angulaire (et par conséquent l'étendue du chevauchement avec le galet précédent représente respectivement moins de 50%, de préférence moins de 25% voire moins de 10%).

A titre d'exemple, on pourra considérer que les vues schématiques des figures 6 à 9 s'appliquent à un dispositif de rabattage 10 comprenant trois galets presseurs 11, 12, 13, que ces figures sont ramenées fictivement, par commodité, dans un même plan bissecteur, et que la figure 6 représente le premier galet presseur 11 en position de départ, ce qui correspondra par convention à une position « zéro degré » en tangage dans le repère associé au plan bissecteur, tandis que la figure 7 représente le premier galet presseur 11 en position d'arrivée, de sorte que la différence de position du premier galet presseur 11 entre la figure 6 et la figure 7 correspond à la contribution propre MT_11 du premier galet presseur 11. De même, on pourra considérer que la figure 8 représente le second galet presseur 12 en position d'arrivée, de sorte que la différence de position du galet presseur 11, 12 en tangage autour de la ligne génératrice L4, L5 entre la figure 7 et la figure 8 correspond à la contribution propre MT_12 du second galet presseur, et que, enfin, la figure 9 illustre le troisième galet presseur 13 en configuration d'arrivée, de sorte que la différence de position du galet presseur 12, 13 entre la figure 8 et la figure 9 correspond à la contribution propre MT_13 du troisième galet presseur 13.

Dans cet exemple, on pourra prévoir que :
- la position de départ du premier galet presseur 11 se situe à zéro degré en tangage, et la position d'arrivée du premier galet presseur 11 se situe à 60 degrés en tangage (ici dans le sens anti-horaire du mouvement de basculement en tangage MT),
- tandis que la position de départ du second galet presseur 12 se situe à 55 degrés en tangage (soient 5 degrés en amont de la position d'arrivée du premier galet presseur 11) et la position d'arrivée du second galet presseur à 125 degrés,
- la position de départ du troisième galet presseur 13 se trouve à 120 degrés (soient 5 degrés en amont de la position d'arrivée du second galet presseur 12) et la position d'arrivée dudit troisième (et ici dernier) galet presseur 13 se trouve à 215 degrés.

Selon une telle configuration, la contribution propre MT_11 du premier galet presseur 11 vaudra donc 60 deg (= position d'arrivée du premier galet presseur 11 - position de départ du premier galet presseur 11 = 60 deg - 0 deg), la contribution propre MT_12 du second galet presseur 12 vaudra 65 deg (= position d'arrivée du second galet presseur 12 - position d'arrivée du premier galet presseur 11 qui l'a précédé = 125 deg - 60 deg), et la contribution propre MT_13 du troisième et dernier galet presseur 13 vaudra 90 deg (= position d'arrivée du troisième galet presseur 13 - position d'arrivée du second galet presseur 12 = 215 deg - 125 deg).

Le chevauchement en tangage entre le second galet presseur 12 et le premier galet presseur 11 sera alors de 5 deg (= 60 deg - 55 deg), et le chevauchement en tangage entre le troisième galet presseur 13 et le second galet presseur 12 également de 5 deg (= 125 deg - 120 deg).

Bien entendu, les valeurs des positions d'arrivée ci-dessus, et le cas échéant les valeurs correspondantes des positions de départ déterminées par rapport auxdites positions d'arrivée en tenant compte du chevauchement souhaité, pourront être ajustées, par exemple de +/- 30 degrés, ou de +/- 15 degrés par rapport aux valeurs nominales indiquées ci-dessus, en fonction notamment de la longueur axiale du tronçon d'extrémité 3A, 3B à replier.

De préférence, le dispositif de rabattage 10 est agencé de manière à faire exécuter par l'organe presseur 11, 12, 13, dans le secteur angulaire de travail A11, A12, A13, un mouvement basculant en tangage MT aller (noté MT+) et retour (noté MT-) autour de la ligne génératrice L4, L5 de la tringle de renfort 4, 5, depuis une position de départ en tangage (figures 11, 13, 15 et 18) jusqu'à une position d'arrivée en tangage (figures 12, 14, 17 et 19), puis réciproquement, de la position d'arrivée en tangage (figures 12, 14, 17 et 19) jusqu'à revenir à la position de départ en tangage (figures 11, 13, 15 et 18).

Avantageusement, le fait d'utiliser un mouvement basculant de va-et-vient en tangage permet tout d'abord de ramener systématiquement l'organe presseur 11, 12, 13, respectivement chaque organe presseur 11, 12, 13, dans sa position de départ en tangage autour de la ligne génératrice L4, L5 de la tringle de renfort 4, 5 dans le secteur angulaire de travail considéré, avant de repositionner ledit organe presseur devant un autre secteur angulaire de la paroi 3, de sorte que ledit organe presseur est automatiquement prêt à réitérer son mouvement basculant en tangage MT à l'identique sitôt qu'il est placé en vis-à-vis d'un nouveau secteur angulaire de travail de la paroi 3. Le fonctionnement du dispositif de rabattage 10 est ainsi parfaitement reproductible, et ce à l'infini, c'est-à-dire un nombre de fois aussi élevé que nécessaire pour chaque organe presseur 11, 12, 13.

De surcroît, l'utilisation d'un mouvement basculant de va et vient en tangage permet à un même organe presseur 11, 12, 13 d'exécuter, dans un même secteur angulaire de travail A11, A12, A13, et donc à l'encontre de la même portion du tronçon d'extrémité 3A, 3B, deux passages successifs, un à l'aller MT+ (ici dans le sens anti-horaire sur les figures 6 à 17), l'autre au retour MT- (ici dans le sens horaire sur les figures 6 à 17), ce qui permet donc d'obtenir une double action de rouletage, une dans chaque sens, et donc d'améliorer la qualité de l'adhérence du tronçon d'extrémité 3A, 3B contre la tringle de renfort 4, 5 puis le tronçon central 3C, notamment par rapport à un mouvement basculant qui ne comprendrait qu'un seul passage (même si une telle variante de mise en œuvre reste envisageable dans l'absolu).

On notera par ailleurs que, de manière à ce que l'organe presseur 11, 12, 13 exerce une compression satisfaisante du tronçon d'extrémité 3A, 3B à l'encontre de la tringle de renfort 4, 5 et du tronçon central 3C, ledit organe presseur 11, 12, 13 est de préférence pressé au contact du tronçon d'extrémité 3A, 3B, et plus précisément au contact de la face radialement externe 3A_out, 3B_out de ce dernier, à l'aide d'un organe élastique 35 qui pourra assurer une précharge. Cet organe élastique 35 pourra par exemple être formé par un ressort ou bien, de préférence, comme cela sera détaillé par la suite, par un vérin pneumatique 44, 45, 46.

Selon l'invention, l'installation 1 comprend également un dispositif d'entraînement 20 qui est conçu pour modifier, par incréments angulaires successifs, la position relative de l'organe presseur 11, 12, 13 par rapport au bloc carcasse 2 autour de l'axe de roulis X3, de manière à ce que l'organe presseur 11, 12, 13 puisse exécuter son mouvement basculant en tangage MT successivement dans différents secteurs angulaires de travail A11, A12, A13 pour rabattre les unes après les autres les portions correspondantes du tronçon d'extrémité 3A, 3B.

Ainsi, chaque organe presseur 11, 12, 13 peut parcourir pas à pas, incrément angulaire après incrément angulaire, la circonférence complète du tronçon d'extrémité 3A, 3B autour de l'axe de roulis X3, de sorte à répéter, à chaque incrément angulaire, et donc dans chaque nouveau secteur angulaire de la paroi 3 qui se présente audit organe presseur 11, 12, 13, son mouvement basculant en tangage MT, et ce jusqu'à ce que le cumul des secteurs angulaires successivement traités par un même organe presseur 11, 12, 13 atteigne voire dépasse un tour complet (soient au moins 360 degrés) autour de l'axe de roulis X3, ce qui correspond à une passe complète de rabattage. Dans le cas où plusieurs passes de rabattage seraient nécessaires, le processus pourrait se répéter sur plusieurs tours complets autour de l'axe de roulis X3, chaque tour supplémentaire correspondant à une passe supplémentaire.

On pourra envisager plusieurs variantes de mise en œuvre du dispositif d'entraînement 20, qui pourra soit, selon une première variante, permettre de déplacer le ou les organes presseurs 11, 12, 13 en rotation de roulis RX autour de l'axe roulis X3 par rapport à un bloc carcasse 2 fixe, soit, selon une seconde variante, permettre de déplacer activement aussi bien le ou les organes presseurs 11, 12, 13 que le bloc carcasse 2, en rotation autour de l'axe de roulis X3, soit enfin, selon une troisième variante, permettre de déplacer le bloc carcasse 2 en rotation RX sur lui-même autour de l'axe de roulis X3, en vis-à-vis d'organes presseurs 11, 12, 13 qui occupent des positions fixes, c'est-à-dire invariantes, en azimut autour de l'axe de roulis X3.

Les première et seconde variantes pourraient notamment être mises en œuvre en faisant porter l'au moins un (ou chaque) organe presseur 11, 12, 13 par un bras robotisé 60 qui porterait à son extrémité l'organe presseur 11, et qui serait capable d'exécuter aussi bien i) des déplacements angulaires incrémentaux de l'organe presseur 11, 12, 13 en roulis par rapport au bloc carcasse 2, autour de l'axe de roulis X3, pour changer ledit organe presseur de secteur angulaire de travail et faire parcourir peu à peu audit organe presseur 11, 12, 13, par incréments angulaires, un tour complet ,voire si nécessaire plusieurs tours complets, autour de l'axe de roulis X3, que ii) des mouvements de basculement dudit organe presseur en tangage MT autour de la ligne génératrice L4, L5 de la tringle de renfort 4, 5, dans chaque secteur angulaire de travail A11, A12, A13 successif considéré.

Ledit bras robotisé 60 pourra de préférence être un robot anthropomorphe à six axes, qui, de façon connue en soi, comprend, tel que cela est visible sur la figure 20, une base 61 portant une première articulation 62 dite « épaule » formant une liaison à au moins deux axes de pivot orthogonaux, suivie d'un premier segment 63 dit « bras » qui porte une seconde articulation 64 dite « coude » comprenant de préférence au moins un axe de pivot pour assurer le débattement angulaire d'un second segment 65 dit « avant-bras » dont l'extrémité terminale porte une troisième articulation 66 dite « poignet » qui est mobile selon trois axes de pivot orthogonaux deux à deux, dont l'un est confondu avec l'axe longitudinal de l'avant-bras 65. L'organe presseur 11, 12, 13 est avantageusement fixé au poignet 66.

La troisième variante, qui consiste à pouvoir déplacer le bloc carcasse 2 en rotation sur lui-même autour de l'axe de roulis X3 en vis-à-vis d'organes presseurs 11, 12, 13 qui occupent des positions fixes en azimut autour de l'axe de roulis X3, sera toutefois préférée, afin de simplifier la structure de l'installation 1 et d'améliorer la reproductibilité des mouvements, ainsi que la robustesse et la précision de ladite installation 1.

A ce titre, le dispositif d'entraînement 20 comprend de préférence, tel que cela est visible sur la figure 1, un support de réception 21 qui est monté sur un bâti 22 et qui est agencé pour recevoir le bloc carcasse 2 et pour entraîner ledit bloc carcasse 2 en rotation RX par rapport au bâti 22, par incréments angulaires successifs, autour de l'axe de roulis X3.

Avantageusement, le dispositif d'entraînement 20 peut ainsi faire défiler en vis-à-vis de l'organe presseur 11, respectivement en vis-à-vis de chaque organe presseur 11, 12, 13, les tronçons successifs qui composent la tringle de renfort 4, 5 le long de la ligne génératrice L4, L5, par incréments angulaires qui permettent de faire progresser pas à pas en rotation RX, dite « rotation en roulis », autour de l'axe de roulis X3, le bloc carcasse 3, et donc de faire progresser solidairement la tringle de renfort 4, 5 et le tronçon d'extrémité 3A, 3B associé autour de l'axe de roulis X3, selon la direction circonférentielle.

Le dispositif d'entraînement 20 pourra comprendre des rouleaux de guidage 23, qui soutiennent et entraînent par friction le bloc carcasse 2. Au moins l'un desdits rouleaux de guidage 23 sera entraîné au moyen d'un moteur d'entraînement en roulis 24, de préférence formé par un moteur électrique.

De préférence, l'axe de roulis X3 sera horizontal, et le dispositif d'entraînement 20 comprendra au moins deux paires de rouleaux de guidage 23, à raison d'une paire à l'aplomb de chaque tringle de renfort 4, 5, en appui contre la face radialement externe 3_out de la paroi 3.

L'entraxe des rouleaux de guidage 23 de chaque paire pourra de préférence être ajusté en fonction du diamètre du bloc carcasse 2.

Les rouleaux de guidage 23 pourront de préférence présenter un épaulement afin de bloquer la translation axiale du bloc carcasse 2 le long de l'axe de roulis, tel que cela est visible sur la figure 1.

Après chaque incrément angulaire par rotation RX autour de l'axe de roulis X3, le dispositif d'entraînement 20 stoppe le mouvement de rotation en roulis, afin de maintenir le bloc carcasse 2 stationnaire en roulis pendant que le ou les organes presseurs 11, 12, 13 exécutent leur mouvement basculant en tangage MT autour de la tringle de renfort 4, 5 afin de rabattre le tronçon d'extrémité 3A, 3B dans leur secteur angulaire de travail A11, A12, A13 respectif. Une fois le mouvement basculant en tangage MT effectué, le dispositif d'entraînement 20 reprend la rotation RX autour de l'axe de roulis X3, afin de déplacer le bloc carcasse 2 d'un incrément angulaire, et ainsi modifier la position de la paroi 3 du bloc carcasse 2 par rapport à la position des organes presseurs 11, 12, 13 autour de l'axe de roulis X3, ce qui revient à placer chaque organe presseur 11, 12, 13 dans un nouveau secteur angulaire de travail. La rotation en roulis RX du bloc carcasse 2 est alors de nouveau interrompue, pour permettre l'exécution par le ou les organes presseurs 11, 12, 13 d'un nouveau mouvement basculant en tangage MT autour de la tringle, dans leur nouveau secteur angulaire de travail A11, A12, A13, et ainsi de suite.

La rotation en roulis RX du bloc carcasse 2 s'effectue avantageusement dans le sens qui entraîne la paroi 3 du premier organe presseur 11 vers le second puis le troisième organe presseur 12, 13, c'est-à-dire dans le sens qui permet à une même portion de la circonférence du tronçon d'extrémité 3A, 3B de se déplacer d'un secteur angulaire de travail à l'autre de telle sorte que le pliage en tangage de ladite portion du tronçon d'extrémité 3A, 3B soit accentué à chaque nouvelle intervention d'un organe presseur 11, 12, 13.

La valeur de l'incrément angulaire sera choisie notamment en fonction du diamètre du bloc carcasse 2 et de la longueur d'arc que couvre l'organe presseur 11 autour de l'axe de roulis X3 (et par conséquent de la valeur du secteur angulaire de travail A11). Cette valeur d'incrément angulaire représentera donc une fraction, strictement inférieure à 1, de la circonférence de la tringle de renfort 4, 5 autour de l'axe de roulis X3.

De préférence, l'incrément angulaire représentera une fraction de la circonférence de la tringle de renfort 4, 5 (ou, de manière équivalente, une fraction de la longueur de la ligne génératrice L4, L5) inférieure ou égale à 3,33 % (soit sensiblement une fraction égale à 12 deg/360 deg), préférentiellement comprise entre 0,25 % (ce qui correspond environ à 1 deg/360 deg) et 1,4 % (ce qui correspond à environ 5 deg/360 deg).

L'incrément angulaire sera de préférence sensiblement égal à l'étendue du secteur angulaire de travail A11, le cas échéant du plus petit des secteurs angulaires de travail A11, A12, A13.

Par exemple, la valeur de l'incrément angulaire pourra être comprise entre 75 % et 120 % de la taille du plus petit des secteurs angulaires de travail A11, A12, A13, ou, si les secteurs angulaires de travail A11, A12, A13 ont de préférence tous la même taille, entre 75% et 120% de la taille commune des secteurs de travail A11, A12, A13. On observera à ce titre qu'une valeur inférieure à 100% permet d'obtenir un pliage redondant, dans la mesure où un même organe presseur 11, 12, 13 interviendra successivement dans des secteurs angulaires de travail successifs qui seront partiellement chevauchants deux à deux, tandis qu'une valeur de 100% permet de décaler angulairement, à chaque incrément, l'organe presseur 11, 12, 13 de la valeur exacte du secteur angulaire qu'il vient de traiter, de sorte que ledit organe presseur traite ainsi successivement des secteurs angulaires de travail A11, A12, A13 successifs qui sont adjacents les uns aux autres.

A titre indicatif, la valeur de l'incrément angulaire dont on décale, à chaque itération, la paroi cylindrique 3 du bloc carcasse 2 par rapport à l'organe presseur 11, 12, 13 considéré, autour de l'axe de roulis X3, pourra être de préférence inférieure à 12 degrés, et plus préférentiellement comprise entre 1 degré et 5 degrés.

De préférence, l'incrément angulaire sera identique à chaque itération.

En outre, de préférence, l'incrément angulaire sera, pour une itération concernée, et de préférence pour chacune des itérations d'un même tour autour de l'axe de roulis X3, le même pour tous les différents organes presseurs 11, 12, 13. Ce sera avantageusement le cas de façon systématique, par construction, lorsqu'on utilise un support de réception 21 qui entraîne le bloc carcasse 2 en rotation en roulis RX de façon simultanée et identique par rapport aux différents organes presseurs 11, 12, 13 répartis en position fixe autour de l'axe de roulis X3.

De préférence, et en particulier en combinaison avec un support de réception 21 tel que décrit ci-dessus, apte à entraîner le bloc carcasse en rotation autour de l'axe de roulis X3, le dispositif de rabattage 10 pourra comprendre une embase 30 basculante qui porte un bras 31, 32, 33 supportant l'organe presseur 11, 12, 13, embase 30 basculante qui est montée en rotation RY, par rapport au bâti 22, autour d'un axe Y30 dit « axe de tangage » Y30 qui est transverse, et de préférence orthogonal, à l'axe de roulis X3, et qui matérialise l'axe autour duquel s'effectuent les mouvements basculants en tangage MT de l'organe presseur 11, 12, 13, tel que cela est notamment visible sur les figures 1 et 2.

Avantageusement, un tel agencement sera particulièrement simple, compact, et robuste.

De préférence, l'axe de tangage Y30 est contenu dans un plan normal à l'axe de roulis X3, et est tangent à la ligne génératrice L4, L5 de la tringle de renfort 4, 5 concernée.

La rotation en tangage RY de l'embase 30 basculante pourra être assurée par un moteur d'entraînement en tangage 34, de préférence formé par un moteur électrique. Ledit moteur 34 pourra notamment assurer, le cas échéant, le mouvement alterné de va-et-vient en tangage MT+, MT- mentionné plus haut.

Le bras 31, 32, 33 pourra de préférence se présenter sous la forme d'une fourche qui porte l'axe central Y11, Y12, Y13 de rotation de l'organe presseur 11, 12, 13 concerné.

Selon une caractéristique préférentielle qui peut constituer une invention à part entière, le bras 31, 32, 33 qui porte l'organe presseur 11, 12, 13 pourra disposer d'un degré de liberté en rotation différentielle en tangage par rapport à l'embase 30 basculante, rotation différentielle en tangage qui d'une part s'effectuera autour de l'axe de tangage Y30 ou, de préférence, autour d'un axe parallèle audit axe de tangage Y30 et distinct dudit axe de tangage Y30, et qui d'autre part sera placée sous la dépendance d'un organe élastique 35, 44, 45, 46.

Avantageusement, en dotant le bras 31, 32, 33 porteur de l'organe presseur 11, 12, 13 d'un certain degré de liberté en rotation différentielle en tangage par rapport à l'embase 30 basculante, et ce sous le contrôle de la raideur de l'organe élastique 35, 44, 45, 46, on permet d'une part à l'organe presseur 11 d'être suspendu élastiquement pour exercer une précontrainte élastique à l'encontre du tronçon d'extrémité 3A, 3B, et d'autre part au dispositif de rabattage 10 de s'adapter, lors du mouvement basculant en tangage MT, à la trajectoire qu'impose à l'organe presseur 11, 12, 14 le profil du tronçon d'extrémité 3A, 3B lorsque ledit tronçon d'extrémité 2A, 3B vient se poser sur la tringle de renfort 4, 5 puis sur la face radialement interne 3C_in du tronçon central 3C.

L'axe de rotation différentielle en tangage pourra par exemple être matérialisé par un arbre 47, 48, 49 qui est monté mobile en rotation sur l'embase 30, le cas échéant entre deux butées qui limitent son débattement en rotation différentielle à moins d'un tour, voire à moins d'un demi-tour ou même moins d'un quart de tour, et sur lequel est fixé le bras 31, 32, 33, qui s'étend de préférence perpendiculairement audit arbre, et donc de préférence perpendiculairement à l'axe de rotation différentielle en tangage.

Comme indiqué plus haut, la suspension élastique du bras 31, 32, 33 pourra être assurée par tout organe élastique 35 adapté, par exemple un ressort, tel qu'un ressort de torsion qui serait interposé entre l'embase 30 et l'arbre 47, 48, 49 considéré ou entre l'arbre 47, 48, 49 et le bras 31, 32, 33 considéré. Selon une possibilité particulièrement préférentielle, la suspension élastique du bras 31, 32, 33 est assurée par un vérin pneumatique 44, 45, 46, par exemple un vérin pneumatique qui agit sur l'arbre 47, 48, 49 par l'intermédiaire d'une manivelle 41, 42, 43.

Dans l'absolu, on pourrait dissocier les différents organes presseurs 11, 12, 13, de sorte à pouvoir commander et exécuter séparément le mouvement basculant en tangage MT de chaque organe presseur.

Toutefois, selon une caractéristique préférentielle qui peut constituer une invention à part entière, et tel que cela est bien visible sur les figures 3, 18 et 19, les plusieurs organes presseurs 11, 12, 13 sont portés par la même embase 30 basculante, de sorte que la rotation RY, ici la rotation en tangage RY, de ladite embase 30 basculante entraîne solidairement lesdits plusieurs organes presseurs 11, 12, 13 selon leur mouvement basculant en tangage MT autour de la tringle de renfort 4, 5.

Avantageusement, les différents organes presseurs 11, 12, 13, ici les trois galets presseurs 11, 12, 13, peuvent ainsi effectuer leur mouvement basculant en tangage MT simultanément, ensemble, et ce au moyen d'un seul moteur d'entraînement en tangage 34 et d'une même embase 30 partagée, ce qui permet des économies de matériel, de place, et d'énergie, et facilite la coordination, ici la synchronisation, des organes presseurs 11, 12, 13.

Avantageusement, l'agencement propre au premier organe presseur 11, et en particulier le montage sur un bras 31 formant une fourche précontrainte élastiquement, pourra être dupliqué au second organe presseur 12 et au troisième organe presseur 13, en prévoyant d'une part un décalage des organes presseurs 11, 12, 13 le long de l'axe de tangage Y30, de manière à ce que lesdits organes presseurs 11, 12, 13 couvrent chacun un secteur angulaire de travail A11, A12, A13 différent, tel que cela est bien visible sur la figure 5, et d'autre part un décalage de base, de préférence permanent, de la position et de l'orientation en tangage, dans le plan bissecteur, des bras 31, 32, 33 respectifs qui portent lesdits organes presseurs 11, 12, 13, de sorte à conférer à chaque organe porteur sa contribution propre MT_11, MT_12, MT_13 au pliage, tel que cela est notamment visible sur les figures 3 et 15 à 17.

On obtiendra ainsi avantageusement une complémentarité d'action des organes presseurs à la fois en roulis, dans des secteurs angulaires de travail A11, A12, A13 multiples, et en tangage, par des contribution propres MT_11, MT_12, MT_13 qui accentuent chacune à leur tour le pliage du tronçon d'extrémité 3A, 3B.

Selon l'invention, l'installation 1 comprend en outre un sélecteur 40 qui est conçu pour placer alternativement l'organe presseur 11, 12, 13 dans une configuration de travail, qui permet audit organe presseur 11, 12, 13 de venir en prise contre la face radialement externe 3A_out, 3B_out du tronçon d'extrémité 3A, 3B dans le secteur angulaire de travail A11, A12, A13 considéré et de forcer le pliage de la portion correspondante du tronçon d'extrémité 3A, 3B lorsque le dispositif de rabattage 10 exécute le mouvement basculant en tangage MT dans ledit secteur angulaire de travail A11, A12, A13 considéré, puis dans une configuration de retrait, qui empêche ledit organe presseur 11, 12, 13 d'interférer avec le tronçon d'extrémité 3A, 3B lorsque le dispositif d'entraînement 20 modifie la position relative dudit organe presseur 11, 12, 13 par rapport à la paroi cylindrique 3 du bloc carcasse 2, autour de l'axe de roulis X3, pour changer de secteur angulaire de travail A11, A12, A13.

Avantageusement, le sélecteur 40 permet en particulier de dégager la trajectoire empruntée par la paroi 3 du bloc carcasse 2 lors de la rotation en roulis RX dudit bloc carcasse, en éloignant, entre deux opérations de basculement en tangage MT et de rabattage successives, les organes presseurs 11, 12, 13 qui pourraient faire obstacle au libre déplacement en roulis du bloc carcasse 2.

A titre illustratif, les figures 3 et 10 montrent une phase dans laquelle l'ensemble des organes presseurs 11, 12, 13 se trouvent en configuration de retrait, pour permettre au dispositif 20 d'entraînement de mettre le bloc carcasse en rotation RX en roulis autour de l'axe de roulis X3 et ce afin de décaler ledit bloc carcasse 2 d'un incrément angulaire par rapport aux positions respectives occupées par les organes presseurs 11, 12, 13 autour dudit axe de roulis X3.

A l'inverse, les figures 15 et 18 montrent une phase dans laquelle l'ensemble des organes presseurs 11, 12, 13 se trouvent en configuration de travail, au contact du tronçon d'extrémité 3A, 3B.

Le sélecteur 40 peut comprendre tout mécanisme approprié, par exemple, de préférence, un système de type embiellage comprenant une manivelle 41, 42, 43 mue par un actionneur 44, 45, 46, tel qu'un vérin 44, 45, 46, de préférence un vérin pneumatique 44, 45, 46. Ladite manivelle 41, 42, 43 entraîne un arbre 47, 48, 49 qui est monté mobile en rotation sur l'embase 30 basculante, selon un axe parallèle à, voire confondu avec, l'axe de tangage Y30, et qui porte le bras 31, 32, 33 portant l'organe presseur 11, 12, 13 considéré, tel que cela est bien visible sur les figures 2 et 3.

L'ensemble dudit mécanisme d'embiellage, et notamment l'actionneur 44, 45, 46 correspondant, est de préférence embarqué sur l'embase 30 basculante.

On notera, ici encore, que le mécanisme du sélecteur 40, qui comporte ici une manivelle 41, 42, 43, un actionneur 44, 45, 46 et un arbre 47, 48, 49, peut de préférence être dupliqué sensiblement à l'identique pour chaque organe presseur 11, 12, 13, afin de doter chaque organe presseur 11, 12, 13 d'un mécanisme sélecteur autonome, indépendant de celui des autres organes presseurs.

Avantageusement, le sélecteur 40 permet d'éviter que, pendant la rotation en roulis RX du bloc carcasse 2, un organe presseur 11, 12, 13 ne frotte contre le tronçon d'extrémité 3A, 3B ou n'entre en collision avec ledit tronçon d'extrémité 3A, 3B, ce qui créerait sur ledit tronçon d'extrémité 3A, 3B un effort orienté selon la direction circonférentielle, de nature à froisser ou à endommager ledit tronçon d'extrémité 3A, 3B

Avantageusement, le sélecteur 40 permet donc de décomposer le processus de rabattage en une alternance d'une part de mouvements de rotation en roulis RX d'une part, qui permettent de faire progresser, par incréments angulaires, le ou les organes presseurs 11, 12, 13 le long de la circonférence de la tringle de renfort 4, 5 et du tronçon d'extrémité 3A, 3B, et d'autre part de mouvements de basculement en tangage RY, MT, qui permettent aux organes presseurs de replier la paroi 3 du bloc carcasse 2 sur elle-même. Chaque type de mouvement (rotation en roulis RX d'une part, basculement en tangage RY, MT d'autre part) est ainsi réalisé de manière intermittente et exclusive, de sorte à s'interrompre pendant que s'exécute l'autre type de mouvement, et ce de manière à éviter l'exécution simultanée des deux types de mouvements, et à permettre auxdits deux types de mouvements de s'enchaîner de façon séquentielle, et le cas échéant de se répéter en alternance l'un de l'autre de façon séquentielle.

De préférence, le sélecteur 40 comprend un vérin pneumatique 44 associé à l'organe presseur 11, le cas échéant plusieurs vérins pneumatiques 44, 45, 46 associés chacun à l'un des plusieurs organes presseurs 11, 12, 13, ledit vérin pneumatique 44, 45, 46 étant agencé d'une part pour piloter le passage de l'organe presseur 11, 12, 13 qui lui est associé de la configuration de retrait à la configuration de travail et réciproquement, et d'autre part pour assurer, en configuration de travail, une précharge et une suspension élastique de l'organe presseur 11, 12, 13 considéré à l'encontre du tronçon d'extrémité 3A, 3B.

En effet, dans l'absolu, on pourrait envisager de dissocier la fonction de commutation d'une part, qui permet de passer de la configuration de travail à la configuration de retrait et réciproquement, de la fonction de précontrainte élastique d'autre part, qui permet de plaquer avec une certaine force l'organe presseur contre le tronçon d'extrémité 3A, 3B, à l'encontre de la résistance opposée par la tringle de renfort 4, 5 et le tronçon central 3C de la paroi 3 contre lesquels ledit tronçon d'extrémité 3A, 3B vient en appui, et ainsi de créer une pression adéquate de rouletage.

A cet effet, on pourrait prévoir un sélecteur 40 à mécanisme rigide, par exemple qui comprendrait un actionneur formé par un vérin hydraulique ou un moteur électrique, et assurer la suspension élastique au moyen d'un autre organe élastique 35 mécanique, tel qu'un ressort de torsion qui serait interposé entre d'une part l'arbre 47, 48, 49 mû par ledit actionneur et d'autre part le bras 31, 32, 33 portant l'organe presseur 11, 12, 13.

Cependant, on préférera, par souci de compacité, grouper ces deux fonctions au sein d'un seul et même organe, à savoir un vérin pneumatique 44, 45, 46, en tirant parti de la compressibilité de l'air comprimé, air comprimé qui est par ailleurs utilisé à titre principal pour actionner la tige du vérin, afin d'assurer, à titre auxiliaire, la suspension élastique de la manivelle 41, 42, 43 et par conséquent de l'arbre 47, 48, 49, du bras 31, 32, 33 et donc *in fine* de l'organe presseur 11, 12, 13.

De préférence, l'installation 1 comprend un séquenceur 50 automatique, qui se présente préférentiellement sous forme d'une unité de commande électronique, et ledit séquenceur 50 est programmé pour exécuter et répéter, autant de fois que nécessaire jusqu'à ce que le tronçon d'extrémité 3A, 3B se retrouve plaqué, sur toute sa circonférence autour de l'axe de roulis X3, contre la face radialement interne 3_in de la paroi 3 du bloc carcasse 2, la séquence dite « séquence élémentaire » suivante :
- le sélecteur 40 place au moins un organe presseur 11, 12, 13 en configuration de travail ;
- le dispositif de rabattage 10 fait exécuter audit au moins un organe presseur 11, 12, 13 un mouvement de basculement en tangage MT, de préférence aller MT+ et retour MT-, autour de la ligne génératrice L4, L5 de la tringle de renfort 4, 5, dans le secteur angulaire de travail A11, A12, A13 considéré, de sorte à rabattre vers la face radialement interne 3_in de la paroi 3 du bloc carcasse 2 la portion du tronçon d'extrémité 3A, 3B qui est située dans ledit secteur angulaire de travail A11, A12, A13 ;
- le sélecteur 40 replace l'au moins un organe presseur 11, 12, 13 en configuration de retrait ;
- le dispositif d'entraînement 20 décale autour de l'axe de roulis X3, d'un incrément angulaire choisi, la paroi 3 du bloc carcasse 2 par rapport à l'au moins un organe presseur 11, 12, 13, de sorte à placer ledit au moins un organe presseur 11, 12, 13 dans un nouveau secteur angulaire de travail, distinct du précédent secteur angulaire de travail A11, A12, A13 considéré.

Avantageusement, le séquenceur 50 permet d'organiser de façon très fiable le fonctionnement intermittent et alterné du dispositif de rabattage 10 et du dispositif d'entraînement 20, et plus particulièrement d'automatiser la ou les passes nécessaires au rabattage complet du tronçon d'extrémité 3A, 3B.

Selon une caractéristique préférentielle qui peut constituer une invention à part entière, notamment en combinaison avec une installation 1 qui comprendrait un support de réception 21 entraînant le bloc carcasse 2 en rotation en roulis RX et un dispositif de rabattage comprenant une embase 30 basculante assurant les mouvements de basculement en tangage MT du ou des organes presseurs par rapport au bloc carcasse 2, tel que cela a été décrit plus haut, l'organe presseur 11, et le cas échéant chaque organe presseur 11, 12, 13, est formé par un galet presseur monté en rotation sur son axe central Y11, Y12, Y13, et ledit axe central Y11, Y12, Y13 est, et reste lors du mouvement basculant en tangage MT, sensiblement parallèle, à +/- 10 degrés et de préférence à +/- 5 degrés, et plus préférentiellement exactement parallèle, à la normale à un plan radial, dit « plan bissecteur », qui, tel que cela a été dit plus haut, contient l'axe de roulis X3 ainsi que la bissectrice du secteur angulaire de travail A11, A12, A13 où débute le mouvement basculant en tangage MT du galet presseur 11, 12, 13.

En d'autres termes, l'axe central Y11, Y12, Y13 du galet presseur est et reste sensiblement parallèle à la tangente à la ligne génératrice L4, L5 dans le secteur angulaire de travail A11, A12, A13 dans lequel ledit galet presseur opère. Plus particulièrement l'axe central Y11, Y12, Y13 dudit galet presseur est et reste sensiblement parallèle à l'axe de tangage Y30, en ceci que l'orientation dudit axe central Y11, Y12, Y13 ne dévie jamais, que ce soit dans la position de départ en tangage, dans la position d'arrivée en tangage, et au cours du mouvement basculant en tangage MT, de plus de 10 degrés, de préférence de plus de 5 degrés, par rapport à la direction de la normale au plan bissecteur, et donc par rapport à la direction de la tangente à la ligne génératrice L4, L5 au point d'intersection de ladite ligne génératrice L4, L5 avec le plan bissecteur, et, plus particulièrement, par rapport à la direction de l'axe de tangage Y30.

Plus préférentiellement, l'axe central Y11, Y12, Y13 du galet est, et reste, exactement parallèle à la normale au plan bissecteur, et, plus particulièrement exactement parallèle à l'axe de tangage Y30, c'est-à-dire présente une déviation nulle (zéro degré) par rapport à la direction de la normale au plan bissecteur, respectivement, par rapport à la direction de l'axe de tangage Y30.

Avantageusement, l'orientation des galets presseurs 11, 12, 13 quasi-tangentielle voire exactement tangentielle à la ligne génératrice L4, L5 de la tringle de renfort permet d'opérer un mouvement basculant en tangage MT qui correspond sensiblement voire exactement à un mouvement de rotation centré sur la normale au plan bissecteur, de sorte que chaque point du galet presseur suit une trajectoire qui est quasiment voire exactement contenue dans un plan parallèle au plan bissecteur, donc dans un plan radial ou quasiment radial, de sorte que le mouvement basculant en tangage MT du galet presseur 11, 12, 13 ne génère donc quasiment pas de composante de poussée selon la direction circonférentielle. On évite ainsi de tordre ou froisser le tronçon d'extrémité 3A, 3B soumis à l'action de rouletage, et en particulier de dévier dans la direction circonférentielle les fils de renfort de la ou des nappes carcasses présentes dans le tronçon d'extrémité 3A, 3B et donc soumises au pliage autour de la tringle de renfort 4, 5.

Selon un aménagement préférentiel qui correspond notamment à celui des figures 3, 4 et 5, les trois galets presseurs 11, 12, 13 présente des axes centraux Y11, Y12, Y12 respectifs qui sont tous parallèles entre eux et parallèles au même axe de tangage 30.

On notera que, dans cet arrangement, tous les galets presseurs 11, 12, 13 ne sont en toute rigueur pas strictement tangents à la ligne génératrice L4, L5 de la tringle de renfort 4, 5, en ceci que leurs axes centraux Y11, Y12, Y13 respectifs ne sont pas tous strictement orthoradiaux par rapport à l'axe de roulis X3, puisque lesdits axes centraux Y11, Y12, Y13 sont parallèles entre eux et à l'axe de tangage Y30 commun, alors que les galets presseurs 11, 12, 13 sont répartis en azimut autour de l'axe de roulis X3, dans plusieurs secteurs angulaires de travail A11, A12, A13. Toutefois, les galets presseurs, et donc les secteurs angulaires de travail A11, A12, A13 sont suffisamment proches les uns des autres, et l'étendue de chacun suffisamment petite autour de l'axe de roulis X3, pour respecter géométriquement les conditions énoncées ci-dessus, et donc éviter toute poussée circonférentielle significative sur le tronçon d'extrémité 3A, 3B pendant le pliage.

Bien entendu, l'invention concerne également un procédé de retroussage en tant que tel.

Ledit procédé peut de préférence être mis en œuvre au moyen d'une installation 1 telle que décrite dans ce qui précède.

Selon l'invention, au cours de ce procédé de retroussage :
- selon une étape (E0) d'initialisation, tel que cela est illustré sur la figure 1, on place sur un support de réception 21 (qui peut de préférence présenter tout ou partie des caractéristiques décrites plus haut) un bloc carcasse 2 de bandage qui possède une paroi 3 cylindrique qui s'étend le long et autour d'un axe X3 dit « axe de roulis » X3 ainsi qu'une tringle de renfort 4, 5 qui s'étend selon une ligne génératrice L4, L5 qui forme un anneau autour dudit axe de roulis X3, ladite paroi cylindrique présentant un tronçon d'extrémité 3A, 3B cylindrique qui fait saillie axialement au-delà de la tringle de renfort 4, 5,
- selon une étape (E1) de rabattage, on applique, tel que cela est illustré sur les figures 6, 11, 13, 15 et 18, au moins un organe presseur 11, 12, 13, tel qu'un galet presseur, en appui contre la face radialement externe 3A_out, 3B_out du tronçon d'extrémité 3A, 3B, dans un secteur angulaire A11, A12, A13 de la paroi 3 cylindrique dit « secteur angulaire de travail » A11, A12, A13 qui correspond à une fraction de la circonférence du tronçon d'extrémité 3A, 3B autour de l'axe de roulis X3, tel que cela est visible sur la figure 5, et l'on fait exécuter audit organe presseur 11, 12, 13 un mouvement basculant en tangage MT autour de la ligne génératrice L4, L5 de la tringle de renfort, de sorte que l'organe presseur 11, 12, 13 rabat vers la face radialement interne 3_in de la paroi 3 cylindrique du bloc carcasse 2, autour de la tringle de renfort 4, 5, la portion du tronçon d'extrémité 3A, 3B qui est située dans le secteur angulaire de travail A11, A12, A13 concerné, tel que cela est illustré sur les figures 7 à 9, 12, 14, 16 et 19 ;
- selon une étape (E2) de dégagement, on place l'organe presseur dans une configuration de retrait, afin de dégager ledit organe presseur de tout contact avec le tronçon d'extrémité, comme cela est illustré sur les figures 4 et 10 ;
- selon une étape (E3) de repositionnement, on modifie, d'un incrément angulaire donné, la position relative de l'organe presseur 11, 12, 13 par rapport au bloc carcasse 2 autour de l'axe de roulis X3, de sorte à placer l'organe presseur 11, 12, 13 dans un nouveau secteur angulaire de travail ; ici, plus préférentiellement, on opérera à cet effet une rotation en roulis RX du bloc carcasse 2, tel que cela est illustré sur les figures 1 et 4, tandis que les organes presseurs 11, 12, 13 restent en position fixe, dans leur configuration de retrait ;
- et l'on répète la séquence, dite « séquence élémentaire », qui comprend successivement les étape (E1) de rabattage, (E2) de dégagement puis (E3) de repositionnement, autant de fois que nécessaire jusqu'à ce que le tronçon d'extrémité 3A, 3B se retrouve plaqué, sur toute sa circonférence autour de l'axe de roulis X3, contre la face radialement interne 3_in de la paroi 3 du bloc carcasse 2.

Avantageusement, le procédé selon l'invention permet de rabattre progressivement le tronçon d'extrémité 3A, 3B, secteur angulaire après secteur angulaire.

La rotation en roulis RX du bloc carcasse est activée seulement si les organes presseurs 11, 12, 13 ont été placés préalablement en configuration de retrait.

Ladite rotation en roulis RX du bloc carcasse 2 se poursuit dans la mesure juste nécessaire et suffisante pour décaler en roulis, de la valeur d'un incrément angulaire, de préférence compris entre 1 degré et 5 degrés en fonction du diamètre du bloc carcasse 2, la paroi 3 par rapport aux emplacements des organes presseur 11, 12, 13. Puis la rotation en roulis RX est stoppée, de manière à permettre l'intervention des organes presseurs 11, 12, 13 dans le secteur angulaire de travail A11, A12, A13 qui leur est affecté à chacun.

A cet effet, lesdits organes presseurs sont amenés au contact de la face radialement externe 3A_out, 3B_out du tronçon d'extrémité à plier, puis la rotation en tangage RY de l'embase 30 basculante est activée, de sorte que ladite embase 30 exécute un mouvement basculant en tangage MT autour de l'axe de tangage Y30, de préférence un mouvement basculant aller MT+ et retour MT-, afin d'entraîner les organes presseurs et de contraindre lesdits organes presseurs à rabattre le tronçon d'extrémité 3A, 3B contre la face radialement interne 3_in de la paroi 3.

Plus particulièrement, les galets presseurs 11, 12, 13 effectuent ainsi un rouletage du tronçon d'extrémité 3A, 3B qui, dans le sens de l'aller MT+, débute contre la tringle de renfort (figures 15 et 16) puis se poursuit contre la paroi radialement interne 3C_in du tronçon central 3C de la paroi 3 (figures 16 et 17), jusqu'à ce que les galets presseurs atteignent leurs positions respectives d'arrivée en tangage.

De préférence, un second rouletage est effectué, dans le même secteur angulaire de travail A11, A12, A13, lorsque les galets presseurs 11, 12, 13 sont rappelés jusqu'à leur position de départ en tangage, par le mouvement basculant de retour MT- de l'embase 30.

On notera que, globalement, chaque organe presseur 11, 12, 13 décrit, lors du mouvement basculant en tangage MT, une trajectoire incurvée, voire sensiblement en arc de cercle, trajectoire qui, dans le plan bissecteur, est concave vis-à-vis de la ligne génératrice L4, L5, et qui est donc enveloppante en ceci que ladite trajectoire concave épouse sensiblement le profil sensiblement circulaire de la section de la tringle de renfort 4, 5.

Avantageusement, l'organe de précharge élastique 35 est sollicité, en quelque sorte « armé », dès lors que le ou les organes presseurs 11, 12, 13 se trouvent en configuration de travail, du fait que lorsque le sélecteur 40 manœuvre lesdits organes presseurs 11, 12, 13 pour les faire passer de leur configuration de retrait à leur configuration de travail, lesdits organes presseurs viennent prendre appui contre le tronçon d'extrémité 3A, 3B, et se retrouvent donc contraints entre d'une part l'effort généré par l'actionneur 44, 45, 46 du sélecteur 40, ici le vérin pneumatique 44, 45, 46, qui tend à forcer le rapprochement et la mise en appui des organes presseurs 11, 12, 13 contre le tronçon d'extrémité 3A, 3B, et d'autre part la force de réaction qu'opposent audits organes presseurs 11, 12, 13 le tronçon d'extrémité 3A, 3B et la tringle de renfort 4, 5 sous-jacente, contre lesquels lesdits organes presseurs se trouvent ainsi en butée.

Ainsi, les organes presseurs sont soumis, pendant tout leur mouvement basculant en tangage MT, aller MT+ et retour MT-, à un effort de précharge qui leur permet de plaquer efficacement la face radialement interne 3A_in, 3B_in du tronçon d'extrémité 3A, 3B contre la face radialement interne 3_in de la paroi 3.

De façon particulièrement avantageuse, la suspension élastique des organes presseurs 11, 12, 13, ici plus particulièrement la suspension élastique de chaque bras 31, 32, 33 portant un organe presseur 11, 12, 13, suspension élastique qui s'effectue ici en torsion autour d'un axe, matérialisé ici par l'arbre 47, 48, 49, qui est parallèle à l'axe de tangage Y30 de l'embase 30, permet avantageusement à l'organe presseur 11, 12, 13 de modifier la courbure de sa trajectoire autour de la ligne génératrice L4, L5 lors du mouvement basculant de tangage MT, et plus particulièrement de redresser ladite trajectoire tandis que l'embase 30 effectue sa rotation en tangage RY, de sorte que l'organe presseur 11, 12, 13 adapte sa trajectoire à la transition qui s'opère entre une phase dite « de contournement de la tringle de renfort 4, 5 », dans laquelle ladite trajectoire est, dans le plan bissecteur, sensiblement en arc de cercle (comme c'est le cas pour le second organe presseur 12 sur la figure 13, ou pour le second et le troisième organe presseur 12, 13 sur la figure 15), tout comme la trajectoire de l'embase 30, et une phase subséquente dite « d'aplanissement », dans laquelle l'organe presseur 11, 12, 13 poursuit son mouvement globalement basculant au-delà de la tringle de renfort 4, 5, le long de la paroi du tronçon central 3C, de sorte à plaquer le tronçon d'extrémité contre la paroi radialement interne 3C_in dudit tronçon central, jusqu'à parvenir à la lisière qui forme l'extrémité libre du tronçon d'extrémité 3A, 3B, mais en adoptant pour cela une trajectoire redressée qui devient quasiment axiale, c'est-à-dire quasiment parallèle à l'axe de roulis (comme c'est le cas pour le second organe presseur 12 sur la figure 14 ou pour le second et le troisième organe presseur 12, 13 sur les figures 16 puis 17), et qui se différencie donc de la trajectoire ici purement circulaire de l'embase 30. La suspension élastique du bras 31, 32 fournit avantageusement la composante de mouvement complémentaire qui permet de passer de la trajectoire circulaire de l'embase 30 à la trajectoire plus complexe nécessaire pour suivre le tracé qu'adopte le tronçon d'extrémité 3A, 3B au fur et à mesure de son rabattage vers et sur la paroi du bloc carcasse.

La capacité du bras 31, 32, 33 porteur de l'organe presseur 11, 12, 13 à effectuer un basculement différentiel en tangage par rapport à l'embase 30, et donc par rapport à la rotation principale en tangage RY effectuée par ladite embase 30, tout en restant soumis au rappel élastique lié à la présence et à la raideur de l'organe élastique 35, ici la raideur qui correspond à la compressibilité de l'air utilisé par le vérin pneumatique 44, 45, 46 du sélecteur 40, permet avantageusement audit organe presseur 11, 12, 13 d'accommoder et d'épouser la trajectoire voulue, et ainsi d'atteindre une lisière du tronçon d'extrémité 4, 5 qui peut être relativement lointaine axialement de la ligne génératrice L4, L5 de la tringle de renfort vers l'intérieur du tronçon central 3C, par exemple une lisière qui peut être située à une distance axiale comprise entre 1 cm et 15 cm, voire au-delà de 15 cm, de la ligne génératrice L4, L5 une fois le tronçon d'extrémité 4, 5 totalement plié et accolé au tronçon central 3C, et ce tout en maintenant à tout moment pendant le mouvement de basculement en tangage MT une pression exercée par ledit organe presseur 11, 12, 13 sur le tronçon d'extrémité 4, 5 et dirigée contre la tringle de renfort 4, 5 puis contre la portion de la paroi adjacente à ladite tringle de renfort 4, 5, à savoir contre le tronçon central 3C, pour forcer le tronçon d'extrémité 4, 5 à épouser la forme de la tringle de renfort 4, 5 puis du tronçon central 3C, et ainsi lier intimement, sans faux plis ni bulles d'air, la face radialement interne 3A_in, 3B_in du tronçon d'extrémité 3A, 3B à la face radialement interne 3C_in du tronçon central.

Une fois l'opération de rouletage effectuée par chaque organe presseur 11, 12, 13 dans le secteur angulaire de travail A11, A12, A13 qui lui est attribué, lesdits organes presseurs sont de nouveau placés en configuration de retrait (figures 4 et 10), et une nouvelle rotation en roulis RX d'un incrément angulaire est effectuée, pour placer lesdits organes presseurs 11, 12, 13 en vis-à-vis chacun d'un nouveau secteur angulaire de travail, de préférence sensiblement adjacent au secteur angulaire de travail qu'ils viennent de quitter, de sorte à poursuivre et étendre, le long de la circonférence du tronçon d'extrémité, le pliage dudit tronçon d'extrémité 3A, 3B.

De préférence, au cours de l'étape (E1) de rabattage, on réalise un pliage progressif du tronçon d'extrémité 3A, 3B autour de la tringle de renfort 4, 5 en actionnant plusieurs organes presseurs 11, 12, 13, de préférence trois organes presseurs 11, 12, 13, qui occupent des secteurs angulaires de travail A11, A12, A13 successifs différents autour de l'axe de roulis X3, de sorte que le premier desdits organes presseurs 11 débute le pliage dans son premier secteur angulaire de travail A11, que l'organe presseur suivant 12 poursuit et accentue le pliage lorsque la portion du premier tronçon d'extrémité 3A mise en forme par le premier organe presseur 11 parvient, après un ou plusieurs incrément angulaire en rotation autour de l'axe de roulis X3, dans le secteur angulaire de travail A12 occupé par ledit organe presseur suivant 12, et que le dernier des organes presseurs 13 achève le pliage, dans le secteur angulaire de travail A13 occupé par ledit dernier organe presseur 13, en venant plaquer complètement le tronçon d'extrémité 3A, jusqu'à l'extrémité libre (c'est-à-dire la lisière) dudit tronçon d'extrémité 3A, contre la face radialement interne 3_in de la paroi 3 du bloc carcasse 2, afin d'emprisonner la tringle de renfort 4, 5 dans le pli ainsi formé.

Une telle mise en œuvre est applicable avec deux organes presseurs, auquel cas l'organe presseur suivant et le dernier organe presseur ne font qu'un, ou bien, de préférence, avec trois organes presseurs, voire davantage.

De préférence, on place initialement le premier organe presseur 11 dans la configuration de travail (figure 11), qui permet audit premier organe presseur 11 de venir et de rester en appui contre la face radialement externe 3A_out, 3B_out du tronçon d'extrémité 3A, 3B pendant le mouvement basculant de tangage MT, tandis que le ou les autres organes presseurs 12, 13 suivants restent dans la configuration de retrait qui les empêche d'interférer avec le tronçon d'extrémité 3A, 3B pendant que le premier organe presseur 11 exécute son ou ses mouvements basculants de tangage MT, en l'on exécute plusieurs séquences élémentaires (figures 10, 11, 12) en engageant ainsi seulement le premier organe presseur 11, sans que les autres organes presseurs n'interagissent avec le tronçon d'extrémité 3A, 3B, jusqu'à ce que la portion du tronçon d'extrémité 3A mise en forme par le premier organe presseur 11 parvienne au, ou dépasse le, secteur angulaire de travail A12 occupé par l'organe presseur suivant 12, ici le second organe presseur 12, et l'on place alors ledit organe presseur suivant 12 en configuration de travail (figure 13), avant de poursuivre les séquences élémentaires au cours desquelles, à chaque nouvel incrément angulaire du bloc carcasse 2 en rotation autour de l'axe de roulis X3, le premier organe presseur 11 et l'organe presseur suivant 12 procèdent chacun à un rabattage de la portion du tronçon cylindrique d'extrémité 3A, 3B qui se trouve dans le secteur angulaire de travail A11, A12 qui leur correspond (figure 14).

De même, on attendra que la portion du tronçon d'extrémité 3A, 3B traitée par le second organe presseur 12 atteigne l'emplacement du troisième organe presseur 13 avant d'engager à son tour le troisième organe presseur dans le processus de rabattage (figures 15 et 16).

Ainsi, le procédé peut comprendre un régime transitoire (figures 10 à 14), au cours duquel on procède à un engagement progressif des organes presseurs 11, 12, 13, l'un après l'autre, afin notamment d'éviter d'engager une portion « vierge » du tronçon d'extrémité 3A, 3B, c'est-à-dire une portion dont le pliage n'a pas été amorcé, directement en vis-à-vis d'un organe presseur, ici typiquement le second ou le troisième organe presseur 12, 13, dont la course angulaire en tangage ne serait pas adaptée à la prise en charge d'un tel tronçon vierge, et risquerait de ce fait de causer un froissement ou une déchirure du tronçon d'extrémité 3A, 3B.

Une fois que tous les organes presseurs 11, 13 ont été engagés, on a atteint un régime établi (figures 15 à 17), dans lequel l'ensemble desdits organes presseurs, à chaque nouvel incrément angulaire du bloc carcasse 2 en roulis autour de l'axe de roulis X3, sont placés en configuration de travail (figures 15 et 18) et exécutent tous, de préférence conjointement, le mouvement basculant en tangage MT (figures 16, 17, 19) qui leur permet d'interagir avec le tronçon d'extrémité, dans le secteur angulaire de travail A11, A12, A13 qui leur est propre, pour réaliser le pliage.

A titre indicatif, la "distance" qui sépare l'engagement du second organe presseur 12 de l'engagement du premier organe presseur 11 peut représenter 20 à 30 incréments angulaires. Ainsi, on s'assurera que, au moment où interviendra le second organe presseur 12, le premier organe presseur 11 aura, en quelque sorte, pris suffisamment d'avance, c'est-à-dire amorcé le pliage du tronçon d'extrémité 3A, 3B sur un secteur angulaire cumulé suffisamment étendu autour de l'axe de roulis X3, pour que l'entrée en action du second organe presseur 12 ne crée ni déchirure ni faux-pli.

De préférence, la valeur de l'incrément angulaire dont on décale, à chaque séquence élémentaire, la paroi 3 cylindrique du bloc carcasse 2 par rapport à l'organe presseur 11, 12, 13 considéré, autour de l'axe de roulis X3, c'est-à-dire ici le déplacement angulaire en rotation en roulis RX du bloc carcasse 2 entre deux interventions successives du dispositif de rabattage 10, est compris entre 1 degré et 5 degrés. Comme indiqué plus haut, la valeur de l'incrément angulaire dépend de la largeur W11, W12, W13 de l'organe presseur, et est de préférence égale à la valeur du secteur de travail correspondant couvert par ledit organe presseur 11, 12, 13.

De préférence, l'organe presseur, et le cas échéant chaque organe presseur 11, 12, 13, est formé par un galet presseur 11, 12, 13 qui est monté en rotation, de préférence en libre rotation, sur son axe central Y11, Y12, Y13, et ledit axe central Y11, Y12, Y13 est, et reste lors de ses mouvements basculants en tangage MT, sensiblement parallèle, à +/- 10 degrés et de préférence à +/- 5 degrés, voire encore plus préférentiellement exactement parallèle, à la normale à un plan radial dit « plan bissecteur » qui contient l'axe de roulis X3 ainsi que la bissectrice du secteur angulaire de travail A11, A12, A13 occupé par le galet presseur 11, 12, 13 considéré.

## Revendications

1. Installation (1) de retroussage destinée à rabattre un tronçon d'extrémité (3A, 3B) d'une paroi (3) cylindrique d'un bloc carcasse (2) de bandage autour d'une tringle de renfort (4, 5) dudit bloc carcasse, ladite paroi (3) cylindrique s'étendant le long et autour d'un axe central (X3) dit « axe de roulis » et ladite tringle de renfort (4, 5) s'étendant selon une ligne génératrice (L4, L5) qui forme un anneau autour dudit axe de roulis (X3), ladite installation comprenant:
- un dispositif de rabattage (10) qui comporte au moins un organe presseur (11, 12, 13), tel qu'un galet presseur (11, 12, 13), et qui est agencé pour venir appliquer ledit organe presseur (11, 12, 13) contre la face radialement externe (3A_out, 3B_out) du tronçon d'extrémité (3A, 3B), dans un secteur angulaire (A11, A12, A13) de la paroi (3) cylindrique dit « secteur angulaire de travail » (A11, A12, A13) qui correspond à une fraction de la circonférence du tronçon d'extrémité (3A, 3B) autour de l'axe de roulis (X3), et pour faire exécuter audit organe presseur un mouvement basculant en tangage (MT) autour de la ligne génératrice (L4, L5) de la tringle de renfort (4, 5), de sorte que l'organe presseur (11, 12, 13) rabatte vers la face radialement interne (3_in) de la paroi cylindrique du bloc carcasse (2), autour de la tringle de renfort (4, 5), la portion du tronçon d'extrémité (3A, 3B) qui est située dans le secteur angulaire de travail (A11, A12, A13) concerné, ladite installation étant **caractérisée en ce qu'**elle comprend:
- un dispositif d'entraînement (20) conçu pour modifier, par incréments angulaires successifs, la position relative de l'organe presseur (11, 12, 13) par rapport au bloc carcasse (2) autour de l'axe de roulis (X3), de manière à ce que l'organe presseur (11, 12, 13) puisse exécuter son mouvement basculant en tangage (MT) successivement dans différents secteurs angulaires de travail (A11, A12, A13) pour rabattre les unes après les autres les portions correspondantes du tronçon d'extrémité (3A, 3B) et
- un sélecteur (40) conçu pour placer alternativement l'organe presseur (11, 12, 13) dans une configuration de travail, qui permet audit organe presseur (11, 12, 13) de venir en prise contre la face radialement externe (3A_out, 3B_out) du tronçon d'extrémité (3A, 3B) dans le secteur angulaire de travail (A11, A12, A13) considéré et de forcer le pliage de la portion correspondante du tronçon d'extrémité (3A, 3B) lorsque le dispositif de rabattage (10) exécute le mouvement basculant en tangage (MT) dans ledit secteur angulaire de travail (A11, A12, A13) considéré, puis dans une configuration de retrait, qui empêche ledit organe presseur (11, 12, 13) d'interférer avec le tronçon d'extrémité (3A, 3B) lorsque le dispositif d'entraînement (20) modifie la position relative dudit organe presseur (11, 12, 13) par rapport à la paroi cylindrique (3) du bloc carcasse (2), autour de l'axe de roulis (3), pour changer de secteur angulaire de travail.

2. Installation selon la revendication 1 **caractérisée en ce que** le dispositif de rabattage comprend plusieurs organes presseurs (11, 12, 13), qui sont décalés angulairement les uns par rapport aux autres, en azimut autour de l'axe de roulis (X3), afin de venir en prise sur la face radialement externe (3A_out, 3B_out) du tronçon d'extrémité (3A, 3B) dans des secteurs angulaires de travail (A11, A12, A13) différents qui se succèdent autour de l'axe de roulis (X3), le long de la ligne génératrice (L4, L5) de la tringle de renfort, et **en ce que** lesdits plusieurs organes presseurs (11, 12, 13) présentent des plages de course en tangage autour de la ligne génératrice (L4, L5) qui sont complémentaires les unes des autres, de sorte que chaque organe presseur (11, 12, 13) accentue à son tour, par une contribution propre (MT_11, MT_12, MT_13), le pliage du tronçon d'extrémité (3A, 3B) par-dessus et autour de la tringle de renfort (4, 5), vers la face radialement interne (3_in) de la paroi du bloc carcasse (2).

3. Installation selon la revendication 2 **caractérisée en ce que** chacun des plusieurs organes presseurs (11, 12, 13) apporte, lors de son mouvement basculant en tangage (MT), une contribution propre (MT_11, MT_12, MT_13) au rabattage du tronçon d'extrémité, laquelle contribution propre (MT_11, MT_12, MT_13) correspond à une amplitude de déplacement angulaire de l'organe presseur (11, 12, 13) considéré, en tangage autour de la ligne génératrice (L4, L5) de la tringle de renfort (4, 5), qui est au moins égale à 30 degrés, voire au moins égale à 60 degrés, et de préférence inférieure ou égale à 120 degrés, pour chaque organe presseur (11, 12, 13).

4. Installation selon l'une des revendications 1 à 3 **caractérisée en ce que** le dispositif d'entraînement (20) comprend un support de réception (21) qui est monté sur un bâti (22) et qui est agencé pour recevoir le bloc carcasse (2) et pour entraîner ledit bloc carcasse (2) en rotation (RX) par rapport au bâti, par incréments angulaires successifs, autour de l'axe de roulis (X3), et **en ce que** le dispositif de rabattage (10) comprend une embase (30) basculante qui porte un bras (31, 32, 33) supportant l'organe presseur (11, 12, 13) et qui est montée en rotation (RY), par rapport au bâti (22), autour d'un axe dit « axe de tangage » (Y30) qui est transverse, et de préférence orthogonal, à l'axe de roulis (X3), et qui matérialise l'axe autour duquel s'effectuent les mouvements basculants en tangage (MT) de l'organe presseur (11, 12, 13).

5. Installation selon la revendication 4 **caractérisée en ce que** le bras (31, 32, 33) qui porte l'organe presseur (11, 12, 13) dispose d'un degré de liberté en rotation différentielle en tangage par rapport à l'embase (30) basculante, rotation différentielle en tangage qui d'une part s'effectue autour de l'axe de tangage (Y30) ou, de préférence, autour d'un axe parallèle audit axe de tangage (Y30) et distinct dudit axe de tangage (Y30), et qui d'autre part est placée sous la dépendance d'un organe élastique (35, 44, 45, 46).

6. Installation selon la revendication 4 ou 5 et selon l'une des revendications 2 et 3 **caractérisée en ce que** les plusieurs organes presseurs (11, 12, 13) sont portés par la même embase (30) basculante, de sorte que la rotation (RY) de ladite embase (30) basculante entraîne solidairement lesdits plusieurs organes presseurs (11, 12, 13) selon leur mouvement basculant en tangage (MT) autour de la tringle de renfort (4, 5).

7. Installation selon l'une des revendications précédentes **caractérisée en ce que** le sélecteur (40) comprend un vérin pneumatique (44) associé à l'organe presseur (11), le cas échéant plusieurs vérins pneumatiques (44, 45, 46) associés chacun à l'un des plusieurs organes presseurs (11, 12, 13), ledit vérin pneumatique (44, 45, 46) étant agencé d'une part pour piloter le passage de l'organe presseur (11, 12, 13) qui lui est associé de la configuration de retrait à la configuration de travail et réciproquement, et d'autre part pour assurer, en configuration de travail, une précharge et une suspension élastique de l'organe presseur (11, 12, 13) considéré à l'encontre du tronçon d'extrémité (3A, 3B).

8. Installation selon l'une des revendications précédentes **caractérisée en ce que** le dispositif de rabattage (10) est agencé de manière à faire exécuter par l'organe presseur (11, 12, 13), dans le secteur angulaire de travail (A11, A12, A13) concerné, un mouvement basculant en tangage (MT) aller et retour autour de la ligne génératrice (L4, L5) de la tringle de renfort (4, 5), depuis une position de départ en tangage jusqu'à une position d'arrivée en tangage, puis réciproquement, de la position d'arrivée en tangage jusqu'à revenir à la position de départ en tangage.

9. Installation selon l'une des revendications précédentes **caractérisée en ce qu'**elle comprend un séquenceur (50) automatique, qui se présente de préférence sous forme d'une unité de commande électronique, lequel séquenceur (50) est programmé pour exécuter et répéter, autant de fois que nécessaire jusqu'à ce que le tronçon d'extrémité (3A, 3B) se retrouve plaqué, sur toute sa circonférence autour de l'axe de roulis (X3), contre la face radialement interne (3_in) de la paroi (3) du bloc carcasse (2), la séquence dite « séquence élémentaire » suivante :
- le sélecteur (40) place au moins un organe presseur (11, 12, 13) en configuration de travail ;
- le dispositif de rabattage (10) fait exécuter audit au moins un organe presseur (11, 12, 13) un mouvement de basculement en tangage (MT), de préférence aller et retour, autour de la ligne génératrice (L4, L5) de la tringle de renfort (4, 5), dans le secteur angulaire de travail (A11, A12, A13) considéré, de sorte à rabattre vers la face radialement interne (3_in) de la paroi du bloc carcasse (2) la portion du tronçon d'extrémité (3A, 3B) qui est située dans ledit secteur angulaire de travail (A11, A12, A13) ;
- le sélecteur (40) replace l'au moins un organe presseur (11, 12, 13) en configuration de retrait ;
- le dispositif d'entraînement décale autour de l'axe de roulis (X3), d'un incrément angulaire choisi, la paroi (3) du bloc carcasse (2) par rapport à l'au moins un organe presseur (11, 12, 13), de sorte à placer ledit au moins un organe presseur dans un nouveau secteur angulaire de travail, distinct du précédent secteur angulaire de travail considéré.

10. Installation selon l'une des revendications précédentes **caractérisée en ce que** l'organe presseur (11), et le cas échéant chaque organe presseur (11, 12, 13), est formé par un galet presseur monté en rotation sur son axe central (Y11, Y12, Y13), lequel axe central est, et reste lors du mouvement basculant en tangage (MT), sensiblement parallèle, à +/- 10 degrés et de préférence à +/- 5 degrés, et plus préférentiellement exactement parallèle, à la normale à un plan radial, dit « plan bissecteur », qui contient l'axe de roulis (X3) ainsi que la bissectrice du secteur angulaire de travail (A11, A12, A13) où débute le mouvement basculant en tangage du galet presseur (11, 12, 13).

11. Procédé de retroussage, au cours duquel :
- selon une étape (E0) d'initialisation, on place sur un support de réception (21) un bloc carcasse (2) de bandage qui possède une paroi (3) cylindrique qui s'étend le long et autour d'un axe dit « axe de roulis » (X3) ainsi qu'une tringle de renfort (4, 5) qui s'étend selon une ligne génératrice (L4, L5) qui forme un anneau autour dudit axe de roulis (X3), ladite paroi cylindrique présentant un tronçon d'extrémité (3A, 3B) cylindrique qui fait saillie axialement au-delà de la tringle de renfort (4, 5),
- selon une étape (E1) de rabattage, on applique au moins un organe presseur (11, 12, 13), tel qu'un galet presseur, en appui contre la face radialement externe (3A_out, 3B_out) du tronçon d'extrémité, dans un secteur angulaire de la paroi (3) cylindrique dit « secteur angulaire de travail » (A11, A12, A13) qui correspond à une fraction de la circonférence du tronçon d'extrémité (3A, 3B) autour de l'axe de roulis (X3), et l'on fait exécuter audit organe presseur (11, 12, 13) un mouvement basculant en tangage (MT) autour de la ligne génératrice (L4, L5) de la tringle de renfort, de sorte que l'organe presseur (11, 12, 13) rabat vers la face radialement interne (3_in) de la paroi cylindrique du bloc carcasse (2), autour de la tringle de renfort (4, 5), la portion du tronçon d'extrémité (3A, 3B) qui est située dans le secteur angulaire de travail (A11, A12, A13) concerné,
- selon une étape (E2) de dégagement, on place l'organe presseur (11, 12, 13) dans une configuration de retrait, afin de dégager ledit organe presseur de tout contact avec le tronçon d'extrémité (3A, 3B),
- selon une étape (E3) de repositionnement, on modifie, d'un incrément angulaire donné, la position relative de l'organe presseur (11, 12, 13) par rapport au bloc carcasse (2) autour de l'axe de roulis (X3), de sorte à placer l'organe presseur dans un nouveau secteur angulaire de travail,
- et l'on répète la séquence, dite « séquence élémentaire », qui comprend successivement les étape (E1) de rabattage, (E2) de dégagement puis (E3) de repositionnement, autant de fois que nécessaire jusqu'à ce que le tronçon d'extrémité (3A, 3B) se retrouve plaqué, sur toute sa circonférence autour de l'axe de roulis (X3), contre la face radialement interne (3_in) de la paroi (3) du bloc carcasse (2).

12. Procédé selon la revendication 11 **caractérisé en ce que**, au cours de l'étape (E1) de rabattage, on réalise un pliage progressif du tronçon d'extrémité (3A, 3B) autour de la tringle de renfort (4, 5) en actionnant plusieurs organes presseurs (11, 12, 13), de préférence trois organes presseurs, qui occupent des secteurs angulaires de travail (A11, A12, A13) successifs différents autour de l'axe de roulis (X3), de sorte que le premier desdits organes presseurs (11) débute le pliage dans son premier secteur angulaire de travail (A11), que l'organe presseur suivant (12) poursuit et accentue le pliage lorsque la portion du premier tronçon d'extrémité (3A) mise en forme par le premier organe presseur (11) parvient, après un ou plusieurs incrément angulaire en rotation autour de l'axe de roulis (X3), dans le secteur angulaire de travail (A12) occupé par ledit organe presseur suivant (12), et que le dernier des organes presseurs (13) achève le pliage, dans le secteur angulaire de travail (A13) occupé par ledit dernier organe presseur (13), en venant plaquer complètement le tronçon d'extrémité (3A), jusqu'à l'extrémité libre de celui-ci, contre la face radialement interne (3_in) de la paroi du bloc carcasse (2), afin d'emprisonner la tringle de renfort (4, 5) dans le pli ainsi formé.

13. Procédé selon la revendication 12 **caractérisé en ce que** l'on place initialement le premier organe presseur (11) dans la configuration de travail, qui permet audit premier organe presseur (11) de venir et de rester en appui contre la face radialement externe (3A_out, 3B_out) du tronçon d'extrémité pendant le mouvement basculant de tangage (MT), tandis que le ou les autres organes presseurs (12, 13) suivants restent dans la configuration de retrait qui les empêche d'interférer avec le tronçon d'extrémité (3A, 3B) pendant que le premier organe presseur (11) exécute son ou ses mouvements basculants de tangage (MT), **en ce que** l'on exécute plusieurs séquences élémentaires jusqu'à ce que la portion du tronçon d'extrémité (3A, 3B) mise en forme par le premier organe presseur (11) parvienne au, ou dépasse le, secteur angulaire de travail (A12) occupé par l'organe presseur suivant (12), et l'on place alors ledit organe presseur suivant (12) en configuration de travail, avant de poursuivre les séquences élémentaires au cours desquelles, à chaque nouvel incrément angulaire du bloc carcasse (2) en rotation autour de l'axe de roulis (X3), le premier organe presseur (11) et l'organe presseur suivant (12) procèdent chacun à un rabattage de la portion du tronçon cylindrique d'extrémité (3A, 3B) qui se trouve dans le secteur angulaire de travail (A11, A12) qui leur correspond.

14. Procédé selon l'une des revendications 11 à 13 **caractérisé en ce que** la valeur de l'incrément angulaire dont on décale, à chaque séquence élémentaire, la paroi (3) cylindrique du bloc carcasse (2) par rapport à l'organe presseur (11, 12, 13) considéré, autour de l'axe de roulis (X3), est compris entre 1 degré et 5 degrés.

15. Procédé selon l'une des revendications 11 à 14 **caractérisé en ce que** l'organe presseur, et le cas échéant chaque organe presseur (11, 12, 13), est formé par un galet presseur qui est monté en rotation, de préférence en libre rotation, sur son axe central (Y11, Y12, Y13), et **en ce que** ledit axe central (Y11, Y12, Y13) est, et reste lors de ses mouvements basculants en tangage (MT), sensiblement parallèle, à +/- 10 degrés et de préférence à +/- 5 degrés, voire encore plus préférentiellement exactement parallèle, à la normale à un plan radial dit « plan bissecteur » qui contient l'axe de roulis (X3) ainsi que la bissectrice du secteur angulaire de travail (A11, A12, A13) occupé par le galet considéré.

## Patentansprüche

1. Anlage (1) zum Umschlagen, die dazu bestimmt ist, einen Endabschnitt (3A, 3B) einer zylindrischen Wand (3) eines Karkassenblocks (2) eines Reifens um einen Verstärkungswulstkern (4, 5) des Karkassenblocks umzulegen, wobei sich die zylindrische Wand (3) entlang einer und um eine zentrale Achse (X3), "Rollachse" genannt, erstreckt und wobei sich der Verstärkungswulstkern (4, 5) entlang einer Mantellinie (L4, L5), die einen Ring um die Rollachse (X3) bildet, erstreckt, wobei die Anlage umfasst:
- eine Umlegevorrichtung (10), die mindestens ein Andrückorgan (11, 12, 13) wie eine Andrückrolle (11, 12, 13) umfasst, und die dazu ausgebildet ist, das Andrückorgan (11, 12, 13) gegen die radial äußere Seite (3A_out, 3B_out) des Endabschnitts (3A, 3B) in einem Winkelsektor (A11, A12, A13) der zylindrischen Wand (3), "Arbeitswinkelsektor" (A11, A12, A13) genannt, der einem Bruchteil des Umfangs des Endabschnitts (3A, 3B) um die Rollachse (X3) entspricht, anzulegen und das Andrückorgan eine nickende Kippbewegung (MT) um die Mantellinie (L4, L5) des Verstärkungswulstkerns (4, 5) ausführen zu lassen, so dass das Andrückorgan (11, 12, 13) zu der radial inneren Seite (3_in) der zylindrischen Wand des Karkassenblocks (2) hin, um den Verstärkungswulstkern (4, 5), den Bereich des Endabschnitts (3A, 3B) umlegt, der in dem betreffenden Arbeitswinkelsektor (A11, A12, A13) gelegen ist, wobei die Anlage **dadurch gekennzeichnet ist, dass** sie umfasst:
- eine Antriebsvorrichtung (20), die dazu ausgelegt ist, durch sukzessive Winkelinkremente die relative Position des Andrückorgans (11, 12, 13) in Bezug auf den Karkassenblock (2) um die Rollachse (X3) zu ändern, so dass das Andrückorgan (11, 12, 13) seine nickende Kippbewegung (MT) sukzessive in verschiedenen Arbeitswinkelsektoren (A11, A12, A13) ausführen kann, um die entsprechenden Bereiche des Endabschnitts (3A, 3B) nacheinander umzulegen, und
- einen Wähler (40), der dazu ausgelegt ist, das Andrückorgan (11, 12, 13) wechselweise in eine Arbeitskonfiguration zu platzieren, die es dem Andrückorgan (11, 12,13) ermöglicht, in Eingriff gegen die radial äußere Seite (3A_out, 3B_out) des Endabschnitts (3A, 3B) in dem betrachteten Arbeitswinkelsektor (A11, A12, A13) zu gelangen und das Biegen des entsprechenden Bereichs des Endabschnitts (3A, 3B) zu forcieren, wenn die Umlegevorrichtung (10) die nickende Kippbewegung (MT) in dem betrachteten Arbeitswinkelsektor (A11, A12, A13) ausführt, dann in eine zurückgezogene Konfiguration, die das Andrückorgan (11, 12, 13) daran hindert, mit dem Endabschnitt (3A, 3B) zu interferieren, wenn die Antriebsvorrichtung (20) die relative Position des Andrückorgans (11, 12, 13) in Bezug auf die zylindrische Wand (3) des Karkassenblocks (2) um die Rollachse (3) ändert, um den Arbeitswinkelsektor zu wechseln.

2. Anlage nach Anspruch 1, **dadurch gekennzeichnet, dass** die Umlegevorrichtung mehrere Andrückorgane (11, 12, 13) umfasst, die winklig zueinander azimutal um die Rollachse (X3) versetzt sind, um an der radial äußeren Seite (3A_out, 3B_out) des Endabschnitts (3A, 3B) in verschiedenen Arbeitswinkelsektoren (All, A12, A13), die um die Rollachse (X3) entlang der Mantellinie (L4, L5) des Verstärkungswulstkerns aufeinander folgen, in Eingriff zu gelangen, und dadurch, dass die mehreren Andrückorgane (11, 12, 13) nickende Hubbereiche um die Mantellinie (L4, L5) aufweisen, die komplementär zueinander sind, so dass jedes Andrückorgan (11, 12, 13) durch einen jeweils eigenen Beitrag (MT_11, MT_12, MT_13) das Biegen des Endabschnitts (3A, 3B) über und um den Verstärkungswulstkern (4, 5) zu der radial inneren Seite (3_in) der Wand des Karkassenblocks (2) hin verstärkt.

3. Anlage nach Anspruch 2, **dadurch gekennzeichnet, dass** jedes der mehreren Andrückorgane (11, 12, 13) bei seiner nickenden Kippbewegung (MT) einen eigenen Beitrag (MT_11, MT_12, MT_13) zum Umlegen des Endabschnitts leistet, wobei der eigene Beitrag (MT_11, MT_12, MT_13) einer Winkelverlagerungsamplitude des betrachteten Andrückorgans (11, 12, 13), um die Mantellinie (L4, L5) des Verstärkungswulstkerns (4, 5) nickend, entspricht, die mindestens 30 Grad oder sogar mindestens 60 Grad und bevorzugt 120 Grad oder weniger bei jedem Andrückorgan (11, 12, 13) beträgt.

4. Anlage nach einem der Ansprüche 1 bis 3, **dadurch gekennzeichnet, dass** die Antriebvorrichtung (20) eine Aufnahmehalterung (21) umfasst, die an einem Gestell (22) montiert ist und die dazu ausgebildet ist, den Karkassenblock (2) aufzunehmen und den Karkassenblock (2) in Bezug auf das Gestell drehend (RX) um sukzessive Winkelinkremente um die Rollachse (X3) anzutreiben, und dadurch, dass die Umlegevorrichtung (10) eine kippende Fußplatte (30) umfasst, die einen Arm (31, 32, 33) trägt, der das Andrückorgan (11, 12, 13) haltert, und die in Bezug auf das Gestell (22) drehend (RY) um eine Achse, "Nickachse" (Y30) genannt, montiert ist, die transversal und bevorzugt orthogonal zu der Rollachse (X3) ist und die die Achse darstellt, um welche die nickenden Kippbewegungen (MT) des Andrückorgans (11, 12, 13) erfolgen.

5. Anlage nach Anspruch 4, **dadurch gekennzeichnet, dass** der Arm (31, 32, 33), der das Andrückorgan (11, 12, 13) trägt, über einen Freiheitsgrad in nickender differentieller Drehung in Bezug auf die kippende Fußplatte (30) verfügt, wobei die nickende differentielle Drehung zum einen um die Nickachse (Y30) oder, bevorzugt, um eine parallel zu der Nickachse (Y30) verlaufende und von der Nickachse (Y30) verschiedene Achse erfolgt und zum anderen unter der Abhängigkeit eines elastischen Organs (35, 44, 45, 46) steht.

6. Anlage nach Anspruch 4 oder 5 und nach einem der Ansprüche 2 und 3, **dadurch gekennzeichnet, dass** die mehreren Andrückorgane (11, 12, 13) von derselben kippenden Fußplatte (30) getragen werden, so dass die Drehung (RY) der kippenden Fußplatte (30) die mehreren Andrückorgane (11, 12, 13) fest verbunden gemäß ihrer nickenden Kippbewegung (MT) um den Verstärkungswulstkern (4, 5) herum antreibt.

7. Anlage nach einem der vorhergehenden Ansprüche, **dadurch gekennzeichnet, dass** der Wähler (40) einen Pneumatikzylinder (44), der dem Andrückorgan (11) zugeordnet ist, gegebenenfalls mehrere Pneumatikzylinder (44, 45, 46), die jeweils einem der mehreren Andrückorgane (11, 12, 13) zugeordnet sind, umfasst, wobei der Pneumatikzylinder (44, 45, 46) zum einen dazu ausgebildet ist, den Übergang des ihm zugeordneten Andrückorgans (11, 12, 13) aus der zurückgezogenen Konfiguration in die Arbeitskonfiguration und umgekehrt zu steuern, und zum anderen dazu, in der Arbeitskonfiguration eine Vorbelastung und elastische Federung des betrachteten Andrückorgans (11, 12, 13) gegen den Endabschnitt (3A, 3B) zu gewährleisten.

8. Anlage nach einem der vorhergehenden Ansprüche, **dadurch gekennzeichnet, dass** die Umlegevorrichtung (10) so ausgebildet ist, dass sie von dem Andrückorgan (11, 12, 13), in dem betreffenden Arbeitswinkelsektor (A11, A12, A13), eine nickende Kippbewegung (MT) hin und zurück um die Mantellinie (L4, L5) des Verstärkungswulstkerns (4, 5) von einer Nickausgangsposition bis zu einer Nickendposition, dann umgekehrt von der Nickendposition bis zum Zurückkehren in die Nickausgangsposition ausführen lässt.

9. Anlage nach einem der vorhergehenden Ansprüche, **dadurch gekennzeichnet, dass** sie eine automatische Folgesteuerung (50) umfasst, die bevorzugt in Form einer elektronischen Steuereinheit vorliegt, wobei die Folgesteuerung (50) dazu programmiert ist, so häufig wie erforderlich, bis der Endabschnitt (3A, 3B) über seinen gesamten Umfang um die Rollachse (X3) gegen die radial innere Seite (3_in) der Wand (3) des Karkassenblocks (2) gepresst ist, die folgende Sequenz, "elementare Sequenz" genannt, auszuführen und zu wiederholen:
- der Wähler (40) platziert mindestens ein Andrückorgan (11, 12, 13) in die Arbeitskonfiguration;
- die Umlegevorrichtung (10) lässt das mindestens eine Andrückorgan (11, 12, 13) eine nickende Kippbewegung (MT), bevorzugt hin und zurück, um die Mantellinie (L4, L5) des Verstärkungswulstkerns (4, 5), in dem betrachteten Arbeitswinkelbereich (A11, A12, A13), ausführen, so dass zu der radial inneren Seite (3_in) der Wand des Karkassenblocks (2) hin der Bereich des Endabschnitts (3A, 3B) umgelegt wird, der in dem Arbeitswinkelsektor (A11, A12, A13) gelegen ist;
- der Wähler (40) platziert das mindestens eine Andrückorgan (11, 12, 13) wieder in die zurückgezogene Konfiguration;
- die Antriebsvorrichtung versetzt die Wand (3) des Karkassenblocks (2) in Bezug auf das mindestens eine Andrückorgan (11, 12, 13) um ein gewähltes Winkelinkrement um die Rollachse (X3), so dass das mindestens eine Andrückorgan in einen neuen Arbeitswinkelsektor platziert wird, der verschieden von dem vorherigen betrachteten Arbeitswinkelsektor ist.

10. Anlage nach einem der vorhergehenden Ansprüche, **dadurch gekennzeichnet, dass** das Andrückorgan (11) und gegebenenfalls jedes Andrückorgan (11, 12, 13) durch eine Andrückrolle gebildet wird, die an ihrer zentralen Achse (Y11, Y12, Y13) drehend montiert ist, wobei die zentrale Achse bei der nickenden Kippbewegung (MT), bis auf +/-10 Grad und bevorzugt bis auf +/- 5 Grad, im Wesentlichen parallel und noch bevorzugter genau parallel zu der Normalen zu einer radialen Ebene, "halbierende Ebene" genannt, ist und bleibt, die die Rollachse (X3) sowie die Halbierende des Arbeitswinkelsektors (All, A12, A13) enthält, in dem die nickende Kippbewegung der Andrückrolle (11, 12, 13) beginnt.

11. Verfahren zum Umschlagen, in dessen Verlauf:
- gemäß einem Schritt (E0) der Initialisierung auf einer Aufnahmehalterung (21) ein Karkassenblock (2) eines Reifens platziert wird, der eine zylindrische Wand (3) besitzt, die sich entlang einer und um eine Achse, "Rollachse" (X3) genannt, erstreckt, sowie einen Verstärkungswulstkern (4, 5), der sich entlang einer Mantellinie (L4, L5), die einen Ring um die Rollachse (X3) bildet, erstreckt, wobei die zylindrische Wand einen zylindrischen Endabschnitt (3A, 3B) aufweist, der axial über den Verstärkungswulstkern (4, 5) übersteht,
- gemäß einem Schritt (E1) des Umlegens mindestens ein Andrückorgan (11, 12, 13) wie eine Andrückrolle in Anlage gegen die radial äußere Seite (3A_out, 3B_out) des Endabschnitts in einem Winkelsektor der zylindrischen Wand (3), "Arbeitswinkelsektor" (A11, A12, A13) genannt, der einem Bruchteil des Umfangs des Endabschnitts (3A, 3B) um die Rollachse (X3) entspricht, gebracht wird und man das Andrückorgan (11, 12, 13) eine nickende Kippbewegung (MT) um die Mantellinie (L4, L5) des Verstärkungswulstkerns ausführen lässt, so dass das Andrückorgan (11, 12, 13) zu der radial inneren Seite (3_in) der zylindrischen Wand des Karkassenblocks (2) hin, um den Verstärkungswulstkern (4, 5), den Bereich des Endabschnitts (3A, 3B) umlegt, der in dem betreffenden Arbeitswinkelsektor (A11, A12, A13) gelegen ist,
- gemäß einem Schritt (E2) des Lösens das Andrückorgan (11, 12, 13) in eine zurückgezogene Konfiguration platziert wird, um das Andrückorgan von jedem Kontakt mit dem Endabschnitt (3A, 3B) zu lösen,
- gemäß einem Schritt (E3) des Neupositionierens die relative Position des Andrückorgans (11, 12, 13) in Bezug auf den Karkassenblock (2) um die Rollachse (X3) um ein gegebenes Winkelinkrement geändert wird, so dass das Andrückorgan in einen neuen Arbeitswinkelsektor platziert wird,
- und die Sequenz, "elementare Sequenz" genannt, die sukzessive die Schritte (E1) des Umlegens, (E2) des Lösens, dann (E3) des Neupositionierens umfasst, so oft wie erforderlich wiederholt wird, bis der Endabschnitt (3A, 3B) über seinen gesamten Umfang um die Rollachse (X3) gegen die radial innere Seite (3_in) der Wand (3) des Karkassenblocks (2) gepresst ist.

12. Verfahren nach Anspruch 11, **dadurch gekennzeichnet, dass** im Verlauf des Schritts (E1) des Umlegens ein progressives Biegen des Endabschnitts (3A, 3B) um den Verstärkungswulstkern (4, 5) ausgeführt wird, indem mehrere Andrückorgane (11, 12, 13), bevorzugt drei Andrückorgane, die verschiedene sukzessive Arbeitswinkelsektoren (A11, A12, A13) um die Rollachse (X3) einnehmen, betätigt werden, so dass das erste der Andrückorgane (11) das Biegen in seinem ersten Arbeitswinkelsektor (A11) beginnt, das folgende Andrückorgan (12) das Biegen fortsetzt und verstärkt, wenn der Bereich des ersten Endabschnitts (3A), der von dem ersten Andrückorgan (11) umgeformt wird, nach einem oder mehreren Winkelinkrementen in Drehung um die Rollachse (X3) in den von dem folgenden Andrückorgan (12) eingenommenen Arbeitswinkelbereich (A12) gelangt, und das letzte der Andrückorgane (13) das Biegen in dem Arbeitswinkelsektor (A13), der von dem letzten Andrückorgan (13) eingenommen wird, vollendet, wobei der Endabschnitt (3A) bis zu dessen freiem Ende vollständig gegen die radial innere Seite (3_in) der Wand des Karkassenblocks (2) gepresst wird, um den Verstärkungswulstkern (4, 5) in den so gebildeten Umschlag einzuschließen.

13. Verfahren nach Anspruch 12, **dadurch gekennzeichnet, dass** zunächst das erste Andrückorgan (11) in die Arbeitskonfiguration platziert wird, die es dem ersten Andrückorgan (11) ermöglicht, während der nickenden Kippbewegung (MT) in Anlage an der radial äußeren Seite (3A_out, 3B_out) des Endabschnitts zu gelangen und zu bleiben, während das oder die anderen folgenden Andrückorgane (12, 13) in der zurückgezogenen Konfiguration bleiben, die sie daran hindert, mit dem Endabschnitt (3A, 3B) zu interferieren, während das erste Andrückorgan (11) seine nickende Kippbewegung oder seine nickenden Kippbewegungen (MT) ausführt, dadurch, dass mehrere elementare Sequenzen ausgeführt werden, bis der Bereich des Endabschnitts (3A, 3B), der von dem ersten Andrückorgan (11) umgeformt wird, in den von dem folgenden Andrückorgan (12) eingenommenen Arbeitswinkelsektor (A12) gelangt oder ihn überschreitet, und dann das folgende Andrückorgan (12) in die Arbeitskonfiguration platziert wird, bevor die elementaren Sequenzen fortgesetzt werden, in deren Verlauf, bei jedem neuen Winkelinkrement des Karkassenblocks (2) in Drehung um die Rollachse (X3), das erste Andrückorgan (11) und das folgende Andrückorgan (12) jeweils ein Umlegen des Bereichs des zylindrischen Endabschnitts (3A, 3B) vornehmen, der sich in dem ihnen entsprechenden Arbeitswinkelsektor (A11, A12) befindet.

14. Verfahren nach einem der Ansprüche 11 bis 13, **dadurch gekennzeichnet, dass** der Wert des Winkelinkrements, um das bei jeder elementaren Sequenz die zylindrische Wand (3) des Karkassenblocks (2) in Bezug auf das betrachtete Andrückorgan (11, 12, 13) um die Rollachse (X3) versetzt wird, zwischen 1 Grad und 5 Grad beträgt.

15. Verfahren nach einem der Ansprüche 11 bis 14, **dadurch gekennzeichnet, dass** das Andrückorgan und gegebenenfalls jedes Andrückorgan (11, 12, 13), durch eine Andrückrolle gebildet wird, die an ihrer zentralen Achse (Y11, Y12, Y13) drehend, bevorzugt frei drehend, montiert ist, und dass die zentrale Achse (Y11, Y12, Y13) bei ihren nickenden Kippbewegungen (MT), bis auf +/- 10 Grad und bevorzugt bis auf +/- 5 Grad, im Wesentlichen parallel und noch bevorzugter genau parallel zu der Normalen zu einer radialen Ebene, "halbierende Ebene" genannt, ist und bleibt, die die Rollachse (X3) sowie die Halbierende des Arbeitswinkelsektors (A11, A12, A13) enthält, der von der betrachteten Rolle eingenommen wird.

## Claims

1. Folding-up system (1) intended to fold an end section (3A, 3B) of a cylindrical wall (3) of a tyre carcass assembly (2) around a reinforcing bead core (4, 5) of said carcass assembly, said cylindrical wall (3) extending along and around a central axis (X3) called the "roll axis", and said reinforcing bead core (4, 5) extending along a generatrix (L4, L5) forming a ring around said roll axis (X3), said system comprising :
- a folding device (10), comprising at least one pressing member (11, 12, 13) such as a pressure roller (11, 12, 13), and arranged to cause said pressing member (11, 12, 13) to be applied against the radially outer face (3A_out, 3B_out) of the end section (3A, 3B), in an angular sector (A11, A12, A13) of the cylindrical wall (3) called the "angular working sector" (A11, A12, A13) which corresponds to a fraction of the circumference of the end section (3A, 3B) around the roll axis (X3), and to cause said pressing member to execute a tilting pitching movement (MT) about the generatrix (L4, L5) of the reinforcing bead core (4, 5), so that the pressing member (11, 12, 13) folds the portion of the end section (3A, 3B) located in the angular working sector (A11, A12, A13) concerned towards the radially inner face (3_in) of the cylindrical wall of the carcass assembly (2), around the reinforcing bead core (4, 5), said system being **characterized in that** it comprises:
- a drive device (20) designed to modify the relative position of the pressing member (11, 12, 13), by successive angular increments, with respect to the carcass assembly (2) about the roll axis (X3), so that the pressing member (11, 12, 13) can execute its tilting pitching movement (MT) in different angular working sectors (A11, A12, A13) in order to fold the corresponding portions of the end section (3A, 3B) one after another,
- a selector (40) designed to place the pressing member (11, 12, 13), alternately, in a working configuration, enabling said pressing member (11, 12, 13) to bear against the radially outer face (3A_out, 3B_out) of the end portion in the angular working sector (A11, A12, A13) concerned and to force the corresponding portion of the end section (3A, 3B) to be folded when the folding device (10) executes the tilting pitching movement (MT) in said angular working sector (A11, A12, A13) concerned, and then in a withdrawn configuration which prevents said pressing member (11, 12, 13) from interfering with the end section (3A, 3B) when the drive device (20) modifies the relative position of said pressing member (11, 12, 13) with respect to the cylindrical wall (3) of the carcass assembly (2), about the roll axis (3), to change the angular working sector.

2. System according to Claim 1, **characterized in** the folding device comprises a plurality of pressing members (11, 12, 13) which are offset angularly from one another in azimuth about the roll axis (X3), so as to engage with the radially outer face (3A_out, 3B_out) of the end section (3A, 3B) in different angular working sectors (A11, A12, A13) placed in succession around the roll axis (X3), along the generatrix (L4, L5) of the reinforcing bead core, and **in that** said plurality of pressing members (11, 12, 13) have ranges of pitch travel about the generatrix (L4, L5) that are complementary to one another, so that each pressing member (11, 12, 13) intensifies in turn, by an individual contribution (MT_11, MT_12, MT_13), the folding of the end section (3A, 3B) over and around the reinforcing bead core (4, 5) towards the radially inner face (3_in) of the wall of the carcass assembly (2).

3. System according to Claim 2, **characterized in that** each of the plurality of pressing members 11, 12, 13 provides, in its tilting pitching movement (MT), an individual contribution (MT_11, MT_12, MT_13) to the folding of the end section, which individual contribution (MT_11, MT_12, MT_13) corresponds to an amplitude of angular movement of the pressing member (11, 12, 13) in question, in pitching about the generatrix (L4, L5) of the reinforcing bead core (4, 5), which is at least equal to 30 degrees, or even at least 60 degrees, and preferably less than or equal to 120 degrees, for the each pressing member (11, 12, 13) in question.

4. System according to any of Claims 1 to 3, **characterized in that** the drive device (20) comprises a receiving support (21) which is mounted on a frame (22) and which is arranged to receive the carcass assembly (2) and to drive said carcass assembly (2) in rotation (RX) relative to the frame, by successive angular increments, about the roll axis (X3), and **in that** the folding device (10) comprises a tilting base (30) carrying an arm (31, 32, 33) supporting the pressing member (11, 12, 13), which tilting base is mounted for rotation (RY) relative to the frame (22) about an axis called the "pitch axis" (Y30), which is transverse, and preferably orthogonal, to the roll axis (X3), and which embodies the axis about which the tilting pitching movements (MT) of the pressing member (11, 12, 13).

5. System according to Claim 4, **characterized in that** the arm (31, 32, 33) carrying the pressing member (11, 12, 13) has a degree of freedom in differential pitch rotation relative to the tilting base (30), this differential pitch rotation, on the one hand, taking place about the pitch axis (Y30), or preferably about an axis parallel to said pitch axis (Y30) and separate from said pitch axis (Y30), and, on the other hand, being dependent on an elastic member (35, 44, 45, 46).

6. System according to Claim 4 or 5 and according to either of Claims 2 and 3, **characterized in that** the plurality of pressing members (11, 12, 13) are carried by the same tilting base (30), so that the rotation (RY) of said tilting base (30) drives said plurality of pressing members (11, 12, 13) jointly in their tilting pitching movement (MT) about the reinforcing bead core (4, 5).

7. System according to any of the preceding claims, **characterized in that** the selector (40) comprises a pneumatic actuator (44) associated with the pressing member (11), or if necessary a plurality of pneumatic actuators (44, 45, 46), each associated with one of the plurality of pressing members (11, 12, 13), said pneumatic actuator (44, 45, 46) being arranged, on the one hand, to control the passage of the pressing member (11, 12, 13) associated therewith from the withdrawn configuration to the working configuration and vice versa, and, on the other hand, to provide, in a working configuration, pre-stressing and elastic suspension of the pressing member (11, 12, 13) in question against the end section (3A, 3B).

8. System according to any of the preceding claims, **characterized in that** the folding device (10) is arranged so as to cause the pressing member (11, 12, 13) to execute, in the angular working sector (A11, A12, A13) concerned, an outward and return tilting pitching movement MT about the generatrix (L4, L5) of the reinforcing bead core (4, 5), from a pitch starting position to a pitch arrival position, and then in reverse, from the pitch arrival position, to return to the pitch starting position.

9. System according to any of the preceding claims, **characterized in that** it comprises an automatic sequencer (50), preferably taking the form of an electronic control unit, and said sequencer (50) is programmed to execute and repeat, as often as required, until the end section (3A, 3B) has been pressed, along its whole circumference about the roll axis (X3), against the radially inner face (3_in) of the wall (3) of the carcass assembly (2), the following sequence, called the "elementary sequence":
- the selector (40) places at least one pressing member (11, 12, 13) in the working configuration;
- the folding device (10) causes said at least one pressing member (11, 12, 13) to execute a tilting pitching movement (MT), preferably an outward and a return movement, about the generatrix (L4, L5) of the reinforcing bead core (4, 5), in the angular working sector (A11, A12, A13) in question, so as to fold towards the radially inner face (3_in) of the wall of the carcass assembly (2) the portion of the end section (3A, 3B) that is located in said angular working sector (A11, A12, A13);
- the selector (40) places the at least one pressing member (11, 12, 13) back in the withdrawn configuration;
- the drive device offsets the wall (3) of the carcass assembly (2) about the roll axis (X3) by a chosen angular increment, relative to the at least one pressing member (11, 12, 13), so as to place said at least one pressing member in a new angular working sector, separate from the preceding angular working sector in question.

10. System according to any of the preceding claims, **characterized in that** the pressing member (11), and if appropriate each pressing member (11, 12, 13), is formed by a pressure roller which is mounted rotatably on its central axis (Y11, Y12, Y13), which central axis is, and remains during the tilting pitching movement (MT), substantially parallel, at +/- 10 degrees or preferably at +/- 5 degrees, or more preferably exactly parallel, to the normal to a radial plan, called the "bisecting plane", that contains the roll axis (X3) together with the bisector of the angular working sector (A11, A12, A13) where the tilting pitching movement of the pressure roller (11, 12, 13) starts.

11. Folding-up method, in the course of which:
- in an initialization step (E0), a tyre carcass assembly (2) is placed on a receiving support (21), this carcass assembly having a cylindrical wall (3) extending along and about an axis called the "roll axis" (X3), together with a reinforcing bead core (4, 5) extending along a generatrix (L4, L5) forming a ring about said roll axis (X3), said cylindrical wall having a cylindrical end section (3A, 3B) that projects axially beyond the reinforcing bead core (4, 5),
- in a folding step (E1), at least one pressing member (11, 12, 13), such as a pressure roller, is applied against the radially outer face (3A_out, 3B_out) of the end section, in an angular sector of the cylindrical wall (3) called the "angular working sector" (A11, A12, A13), which corresponds to a fraction of the circumference of the end section (3A, 3B) about the roll axis (X3), and said pressing member (11, 12, 13) is caused to execute a tilting pitching movement (MT) about the generatrix (L4, L5) of the reinforcing bead core, so that the pressing member (11, 12, 13) folds, towards the radially inner face (3_in) of the cylindrical wall of the carcass assembly (2), around the reinforcing bead core (4, 5), the portion of the end section (3A, 3B) which is located in the angular working sector (A11, A12, A13) in question;
- in a disengagement step (E2), the pressing member (11, 12, 13) is placed in a withdrawn configuration, in order to disengage said pressing member from any contact with the end section;
- in a repositioning step (E3), the relative position of the pressing member (11, 12, 13) with respect to the carcass assembly (2) about the roll axis (X3) is modified by a given angular increment, so as to place the pressing member in a new angular working sector; - and the sequence is repeated, this sequence being called the "elementary sequence" and comprising, successively, the steps of folding (E1), disengagement (E2) and then repositioning (E3), as many times as required, until the end section (3A, 3B) has been pressed, along the whole of its circumference about the roll axis (X3), against the radially inner face (3_in) of the wall (3) of the carcass assembly (2).

12. Method according to Claim 11, **characterized in that**, in the folding step (E1), the end section (3A, 3B) is progressively folded around the reinforcing bead core (4, 5) by actuating a plurality of pressing members (11, 12, 13), preferably three pressing members, which occupy successive different angular working sectors (A11, A12, A13) around the roll axis (X3), so that the first of said pressing members (11) starts the folding in its first angular working sector (A11); the next pressing member (12) continues and intensifies the folding when the portion of the first end section (3A) shaped by the first pressing member (11) reaches, after one or more angular increments of rotation about the roll axis (X3), the angular working sector (A12) occupied by said next pressing member (12); and the last of the pressing members (13) completes the folding, in the angular working sector (A13) occupied by said last pressing member (13), by completely pressing the end section (3A), up to the free end thereof, against the radially inner face (3_in) of the wall of the carcass assembly (2), in order to trap the reinforcing bead core (4, 5) in the fold thus formed.

13. Method according to Claim 12, **characterized in that** the first pressing member (11) is initially placed in the working configuration, enabling said first pressing member (11) to come to bear, and remain, against the radially outer face (3A_out, 3B_out) of the end section during the tilting pitching movement (MT), while the other following pressing member or members (12, 13) remain in the withdrawn configuration which prevents them from interfering with the end section (3A, 3B) while the first pressing member (11) executes its tilting pitching movement or movements (MT), and a plurality of elementary sequences are executed until the portion of the end section (3A, 3B) shaped by the first pressing member (11) reaches, or passes beyond, the angular working sector (A12) occupied by the next pressing member (12), and said next pressing member (12) is then placed in the working configuration before the continuation of the elementary sequences, in the course of which, at each new angular increment of rotation of the carcass assembly (2) about the roll axis (X3), the first pressing member (11) and the next pressing member (12) each proceed to fold the portion of the cylindrical end section (3A, 3B) located in the angular working sector (A11, A12) corresponding to them.

14. Method according to any of Claims 11 to 13, **characterized in that** the value of the angular increment by which the cylindrical wall (3) of the carcass assembly (2) is offset relative to the pressing member (11, 12, 13) in question about the roll axis (X3) is between 1 degree and 5 degrees.

15. Method according to any of Claims 11 to 14, **characterized in that** the pressing member, and if appropriate each pressing member (11, 12, 13), is formed by a pressure roller which is mounted rotatably, preferably in free rotation, on its central axis (Y11, Y12, Y13), and **in that** said central axis (Y11, Y12, Y13) is, and remains during its tilting pitching movements (MT), substantially parallel, at +/- 10 degrees or preferably at +/- 5 degrees, or even more preferably exactly parallel, to the normal to a radial plan called the "bisecting plane" that contains the roll axis (X3) together with the bisector of the angular working sector (A11, A12, A13) occupied by the roller in question.
